# EUROPEAN PATENT APPLICATION

(11) **EP 4 835 779 A1**
(43) Date of publication of application: **04.11.2026**
(21) Application number: 24910278.1
(22) Date of filing: 31.10.2024
(51) Int. Cl.: G06Q 20/22

(54) **RESOURCE MANAGEMENT METHOD FOR BLOCKCHAIN SYSTEM, BLOCKCHAIN NODE, AND BLOCKCHAIN SYSTEM**

(30) Priority: 29.12.2023 CN 202311866632
(71) Applicant: Ant Blockchain Technology (Shanghai) Co., Ltd., Shanghai 200010 (CN)
(72) Inventor: HU, Wenbo, Shanghai 200010 (CN); LI, Yuwen, Shanghai 200010 (CN); ZHOU, Chenhui, Shanghai 200010 (CN); ZHUO, Haizhen, Shanghai 200010 (CN); WEI, Changzheng, Shanghai 200010 (CN); YAN, Ying, Shanghai 200010 (CN); ZHANG, Hui, Shanghai 200010 (CN)
(74) Representative: Winter, Brandl - Partnerschaft mbB
(86) International application number: PCT/CN2024/128766
(87) International publication number: WO 2025/139340

(57) **Abstract**

A method executed by a second blockchain system located in Layer 2 includes: implementing, by executing a received seventh transaction, transferring a target resource from a first sub-account belonging to a first rollup mode and corresponding to a first account to a first relay sub-account belonging to the first rollup mode and corresponding to a relay account according to a resource transfer share; sending an eighth transaction to a first blockchain system to cause the first blockchain system to process rollup data of a first batch to which the seventh transaction belongs; sending a ninth transaction to the first blockchain system to cause the first blockchain system to verify whether multiple transactions in the first batch have been correctly executed, and generating an asset-to-be-transferred event corresponding to the seventh transaction if the verification is passed; and generating and executing a tenth transaction according to the asset-to-be-transferred event to implement transferring the target resource from a second relay sub-account belonging to a second rollup mode and corresponding to the relay account to a second sub-account belonging to the second rollup mode and corresponding to a second account according to the resource transfer share.

## Description

### CROSS-REFERENCE TO RELATED APPLICATIONS

This application claims priority to Chinese Patent Application No. 202311866632.1, filed with the China National Intellectual Property Administration on December 29, 2023, and entitled "RESOURCE MANAGEMENT METHOD FOR BLOCKCHAIN SYSTEM, BLOCKCHAIN NODE, AND BLOCKCHAIN SYSTEM," the entire content of which is incorporated herein by reference.

### TECHNICAL FIELD

Embodiments of this specification relate to the field of blockchain technology, and in particular, to a resource management method for a blockchain system, a blockchain node, and a blockchain system.

### BACKGROUND

A blockchain system is a novel application model of computer technologies such as distributed data storage, peer-to-peer transmission, consensus mechanisms, and encryption algorithms. In a blockchain system, data blocks are combined into a chain data structure in a sequentially connected manner according to chronological order, forming a distributed ledger that is tamper-proof and unforgeable guaranteed by cryptographic means. Due to characteristics such as decentralization, information immutability, and autonomy, blockchain systems have received increasing attention and application.

### SUMMARY

An objective of the present invention is to provide a resource management method for a blockchain system, a blockchain node, and a blockchain system.

According to a first aspect, a management method for a blockchain system is provided. The method is executed by a second blockchain system, where the second blockchain system supports M types of rollup modes. The method includes: receiving a seventh transaction, wherein a sender field and a recipient field of the seventh transaction respectively include a first account and a second account, and the seventh transaction further includes a resource transfer share, a first rollup mode corresponding to the sender field, and a second rollup mode corresponding to the recipient field; executing the seventh transaction to implement: transferring, according to the resource transfer share, a second target resource from a first sub-account belonging to the first rollup mode and corresponding to the first account to a first relay sub-account belonging to the first rollup mode and corresponding to a relay account; sending an eighth transaction to a first blockchain system for invoking a fourth method function in a rollup contract deployed in the first blockchain system, to cause the first blockchain system to process rollup data of a first packed transaction batch to which the seventh transaction belongs; sending a ninth transaction to the first blockchain system for invoking a fifth method function in the rollup contract, to cause the first blockchain system to generate an asset-to-be-transferred event corresponding to the seventh transaction after verifying that multiple transactions in the first batch have been correctly executed; and generating a tenth transaction according to the asset-to-be-transferred event corresponding to the seventh transaction, and executing the tenth transaction to implement: transferring, according to the resource transfer share, the second target resource from a second relay sub-account belonging to the second rollup mode and corresponding to the relay account to a second sub-account belonging to the second rollup mode and corresponding to the second account.

According to a second aspect, a resource management method for a blockchain system is provided. The method is executed by a first blockchain system, wherein a rollup contract is deployed in the first blockchain system, and the rollup contract includes a fourth method function and a fifth method function. The method includes: receiving an eighth transaction from a second blockchain system, wherein the eighth transaction is used to invoke the fourth method function, the eighth transaction includes rollup data of a first packed transaction batch to which a seventh transaction belongs, a sender field and a recipient field of the seventh transaction respectively include a first account and a second account, the seventh transaction further includes a resource transfer share, a first rollup mode corresponding to the sender field, and a second rollup mode corresponding to the recipient field, and the eighth transaction is initiated after the second blockchain system implements, by executing the seventh transaction, transferring a second target resource from a first sub-account belonging to the first rollup mode and corresponding to the first account to a first relay sub-account belonging to the first rollup mode and corresponding to a relay account according to the resource transfer share; executing the fourth method function according to the eighth transaction to implement processing the rollup data of the first batch; receiving a ninth transaction from the second blockchain system, wherein the ninth transaction is used to invoke the fifth method function, and the ninth transaction includes the first rollup mode and first proof data corresponding to the first batch; and executing the fifth method function according to the ninth transaction to implement: verifying, according to a verification method corresponding to the first rollup mode and by using the first proof data corresponding to the first batch, whether multiple transactions in the first batch have been correctly executed, and generating an asset-to-be-transferred event corresponding to the seventh transaction if the verification is passed; wherein the asset-to-be-transferred event is used to support the second blockchain system in generating a tenth transaction and implementing, by executing the tenth transaction: transferring, according to the resource transfer share, the second target resource from a second relay sub-account belonging to the second rollup mode and corresponding to the relay account to a second sub-account belonging to the second rollup mode and corresponding to the second account.

According to a third aspect, a second blockchain system is provided. The second blockchain system includes: a receiver configured to receive a seventh transaction, wherein a sender field and a recipient field of the seventh transaction respectively include a first account and a second account, and the seventh transaction further includes a resource transfer share, a first rollup mode corresponding to the sender field, and a second rollup mode corresponding to the recipient field; a sequencer configured to execute the seventh transaction to implement: transferring, according to the resource transfer share, a second target resource from a first sub-account belonging to the first rollup mode and corresponding to the first account to a first relay sub-account belonging to the first rollup mode and corresponding to a relay account; and a relayer configured to send an eighth transaction to a first blockchain system for invoking a fourth method function in a rollup contract deployed in the first blockchain system, to cause the first blockchain system to process rollup data of a first packed transaction batch to which the seventh transaction belongs; and send a ninth transaction to the first blockchain system for invoking a fifth method function in the rollup contract, to cause the first blockchain system to generate an asset-to-be-transferred event corresponding to the seventh transaction after verifying that multiple transactions in the first batch have been correctly executed. The sequencer is further configured to generate a tenth transaction according to the asset-to-be-transferred event corresponding to the seventh transaction, and execute the tenth transaction to implement: transferring, according to the resource transfer share, the second target resource from a second relay sub-account belonging to the second rollup mode and corresponding to the relay account to a second sub-account belonging to the second rollup mode and corresponding to the second account.

According to a fourth aspect, a blockchain node in a first blockchain system is provided. A rollup contract is deployed in the first blockchain system, and the rollup contract includes a fourth method function and a fifth method function. The blockchain node includes: a transaction receiving unit configured to receive an eighth transaction from a second blockchain system, wherein the eighth transaction is used to invoke the fourth method function, the eighth transaction includes rollup data of a first packed transaction batch to which a seventh transaction belongs, a sender field and a recipient field of the seventh transaction respectively include a first account and a second account, the seventh transaction further includes a resource transfer share, a first rollup mode corresponding to the sender field, and a second rollup mode corresponding to the recipient field, and the eighth transaction is initiated after the second blockchain system implements, by executing the seventh transaction, transferring a second target resource from a first sub-account belonging to the first rollup mode and corresponding to the first account to a first relay sub-account belonging to the first rollup mode and corresponding to a relay account according to the resource transfer share; and a transaction execution unit configured to execute the fourth method function according to the eighth transaction to implement processing the rollup data of the first batch. The transaction receiving unit is further configured to receive a ninth transaction from the second blockchain system, wherein the ninth transaction is used to invoke the fifth method function, and the ninth transaction includes the first rollup mode and first proof data corresponding to the first batch. The transaction execution unit is further configured to execute the fifth method function according to the ninth transaction to implement: verifying, according to a verification method corresponding to the first rollup mode and by using the first proof data corresponding to the first batch, whether multiple transactions in the first batch have been correctly executed, and generating an asset-to-be-transferred event corresponding to the seventh transaction if the verification is passed; wherein the asset-to-be-transferred event is used to support the second blockchain system in generating a tenth transaction and implementing, by executing the tenth transaction: transferring, according to the resource transfer share, the second target resource from a second relay sub-account belonging to the second rollup mode and corresponding to the relay account to a second sub-account belonging to the second rollup mode and corresponding to the second account.

According to a fifth aspect, a computing device is provided, including a memory and a processor. Executable code is stored in the memory, and when the processor executes the executable code, the method described in the first or second aspect is implemented.

According to a sixth aspect, a computer-readable storage medium is provided, having a computer program stored thereon. When the computer program is executed in a computing device, the computing device executes the method described in the first or second aspect.

In the technical solutions provided by the embodiments of this specification, since the M types of rollup modes correspond to M different batch chains, it facilitates the second blockchain system to efficiently submit batches belonging to the M batch chains through parallel technology. In addition, the second blockchain system generates and executes the tenth transaction based on the asset-to-be-transferred event corresponding to the seventh transaction only after the first batch to which the seventh transaction belongs has entered an immutable state, thereby completing the resource transfer transaction intended to be completed by the seventh transaction. This prevents the second batch to which the tenth transaction belongs from being rolled back due to execution failure of the first batch to which the seventh transaction belongs.

### BRIEF DESCRIPTION OF THE DRAWINGS

To describe the technical solutions in the embodiments of this specification more clearly, the accompanying drawings required for describing the embodiments are briefly introduced below. Apparently, the accompanying drawings in the following description are merely some embodiments recorded in this specification. For those of ordinary skill in the art, other drawings may also be obtained based on these accompanying drawings without creative efforts.
FIG. 1 is a first schematic diagram illustrating principles of Layer 2 according to an embodiment;
FIG. 2 is a second schematic diagram illustrating principles of Layer 2 according to an embodiment;
FIG. 3 is a third schematic diagram illustrating principles of Layer 2 according to an embodiment;
FIG. 4 is a fourth schematic diagram illustrating principles of Layer 2 according to an embodiment;
FIG. 5 is a schematic diagram illustrating a process of registering a rollup mode according to an embodiment;
FIG. 6 is a first flowchart of a resource management method for a blockchain system provided in an embodiment of this specification;
FIG. 7 is a schematic diagram illustrating collaboration between Layer 1 and Layer 2 to implement resource transfer according to an embodiment;
FIG. 8 is a schematic diagram illustrating a client of a blockchain system and transactions initiated thereby according to an embodiment;
FIG. 9 is a second flowchart of a resource management method for a blockchain system provided in an embodiment of this specification;
FIG. 10 is a third flowchart of a resource management method for a blockchain system provided in an embodiment of this specification;
FIG. 11 is a fourth flowchart of a resource management method for a blockchain system provided in an embodiment of this specification;
FIG. 12 is a fifth flowchart of a resource management method for a blockchain system provided in an embodiment of this specification;
FIG. 13 is a schematic structural diagram of a batch chain provided in an embodiment of this specification; and
FIG. 14 is a schematic diagram illustrating event relationships provided in an embodiment of this specification.

### DETAILED DESCRIPTION OF THE EMBODIMENTS

To enable those skilled in the art to better understand the technical solutions in this specification, the technical solutions in the embodiments of this specification are clearly and completely described below with reference to the accompanying drawings. Apparently, the described embodiments are merely some rather than all of the embodiments of this specification. Based on the embodiments in this specification, all other embodiments obtained by those of ordinary skill in the art without creative efforts shall fall within the protection scope of this specification.

There exists a classic CAP theorem in distributed systems-Consistency, Availability, and Partition tolerance-which cannot be achieved simultaneously, referred to as the "Impossible Triangle" problem. There also exists an Impossible Triangle in blockchain systems: efficiency, decentralization, and security. Although the "Impossible Triangle" of blockchain systems here lacks explicit theoretical proof, it is a summary of existing blockchain systems. Efficiency, decentralization, and security are defined as follows: Efficiency: the number of transactions processed per second, i.e., TPS (Transactions Per Second); Decentralization: the threshold for participating nodes is sufficiently low to ensure a large number of distributed nodes in the system; Security: the difficulty of launching an attack on the blockchain system is sufficiently high.

Addressing the above-mentioned "Impossible Triangle" problem of blockchain systems, Ethereum (also known as "Mainnet" or "Layer 1"; additionally, currently popular public chain projects such as Binance's BSC and TRON also fall within the category of Layer 1/Mainnet) chose security and decentralization at the expense of efficiency, currently achieving only about 12 to 15 TPS. When there are a large number of transactions to be processed, especially many complex transactions, Layer 1 becomes congested. Besides ordinary transfer transactions, Layer 1 serves as a major platform for popular applications such as DeFi (Decentralized Finance) and NFTs (Non-Fungible Tokens). During peak trading periods, congestion on Layer 1 becomes severe, resulting in significant transaction delays.

High gas fees often become an obstacle to transactions. Although the transition has been made from PoW (Proof of Work) to PoS (Proof of Stake), this only changes the way bookkeeping rights are acquired on the blockchain, while the transaction fees paid to nodes acquiring bookkeeping rights have not significantly decreased. This is because gas fees are designed to cover the consumption of nodes executing transactions (including executing smart contract code), and gas fees will not decrease if this consumption remains unchanged. For example, the transaction fee for a currency exchange transaction on a decentralized exchange may exceed $100 during congestion, deterring many users.

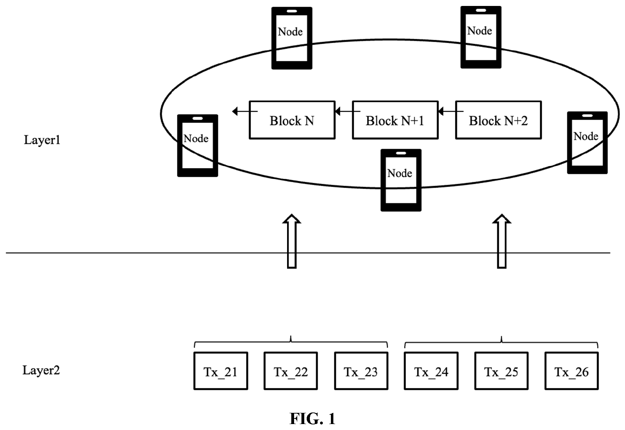

Layer 2 technology is a scalability solution built on top of Layer 1, aiming to solve the problems of low efficiency and high transaction fees on Layer 1. As shown in FIG. 1, transactions can be executed quickly on Layer 2, and Layer 2 synchronizes the final state back to Layer 1 at certain intervals. Layer 2 is dedicated to providing high-speed transaction processing, while security and decentralization are ensured by Layer 1. In this way, while alleviating the pressure on Layer 1, the gas fees for executing transactions on Layer 2 can be significantly reduced, and the gas fees required to synchronize the final state of transaction execution on Layer 2 (rather than all states on Layer 2) back to Layer 1 can also be significantly reduced. Architecting Layer 2 on top of Layer 1 essentially separates the execution process of transactions or contracts from the preservation of the final state; the execution process is placed on Layer 2, and Layer 1 only needs to preserve the final state. In this design, it is necessary to ensure the correctness of the execution process of transactions or contracts on Layer 2, and that the state written to Layer 1 is consistent with the results of correct execution on Layer 2.

Ethereum's Layer 2 includes a mechanism called Rollup.

The core idea of Rollup, as shown in FIG. 1, is to preserve credentials capable of verifying the transaction process on Layer 1, while running the transaction process (computation process) and state storage on Layer 2. The so-called credentials of the transaction process include a set of pre-execution states (Pre-State), post-execution states (Post-State) of the set of transactions, and the set of transactions itself. These can be used to verify whether the state transition corresponding to the set of transactions is correct, and can also be used to reconstruct the execution process of all transactions and the states of all accounts on Layer 2, thereby eliminating security risks caused by data availability on Layer 2.

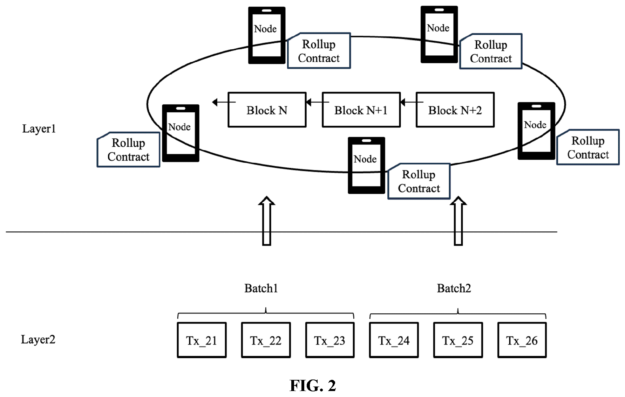

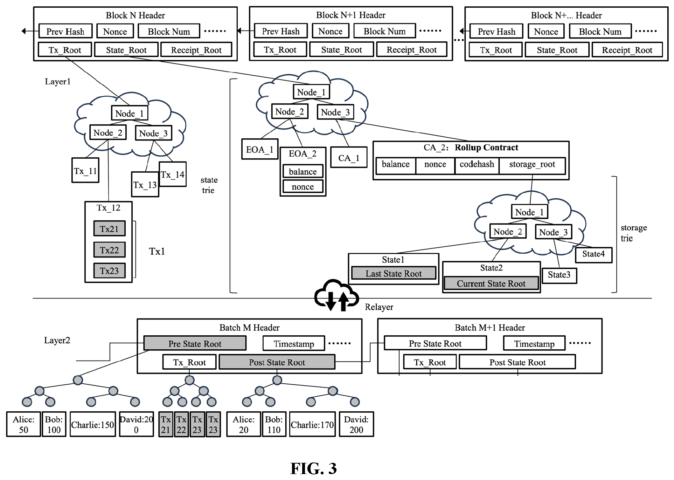

The principle of Rollup can be specifically seen in FIGS. 2 and 3 (FIG. 3 mainly illustrates OP-Rollup described below).

A transaction creating a smart contract is sent to Layer 1. After consensus on Layer 1, nodes on Layer 1 can execute this transaction to complete the deployment of the contract. Specifically, the transaction may be executed by the EVM/WASM of the blockchain node. EVM is a Turing-complete virtual machine, meaning various complex logics can be implemented through it, which is one of the greatest improvements of Ethereum as a representative of Blockchain 2.0 compared to Blockchain 1.0. Users publishing and invoking smart contracts in Ethereum can run them on the EVM. After executing the transaction deploying the smart contract, a contract account corresponding to the smart contract is created on Layer 1. The contract account has an on-chain address and includes a balance, a counter nonce, a hash value of the contract code (Codehash), and a root of the contract storage (Storage_Root). Through Codehash and Storage_Root, the code and account storage of the contract can be preserved in the contract account. The behavior of the smart contract is controlled by the contract code, while the account storage of the smart contract preserves the state of the contract. In other words, the smart contract causes a virtual account containing contract code and account storage to be created on the blockchain. Subsequently, nodes on Layer 1 can receive transaction requests invoking the deployed smart contract. The transaction request may include the address of the invoked contract, the function in the invoked contract, and input parameters. Generally, after the transaction request undergoes consensus, each blockchain node can independently execute the designated invoked smart contract.

The Storage_root in Ethereum is the hash of the root node of an MPT tree, which organizes the storage of the state of the contract account. MPT stands for Merkle Patricia Tree, a tree structure combining the Merkle Tree and the Patricia Tree (a compressed prefix tree, a more space-efficient Trie tree). The Merkle Tree algorithm calculates a hash value for each transaction, then connects them pairwise and recalculates the hash up to the top-level Merkle root. Ethereum uses an improved MPT tree, for example, a 16-ary tree structure, usually simply referred to as an MPT tree. In fact, the Ethereum block header includes roots of three MPT trees: Transaction _Root (abbreviated as Tx_Root), State_Root, and Receipt_Root. State _Root is the hash of the root of the MPT tree composed of the states of all accounts in the current block, i.e., pointing to State _Root is a state trie in the form of an MPT. Concatenating part of the values from each node from the root node to the leaf node of this MPT in sequence can constitute the account address as a key, and the account information stored in the leaf node is the value corresponding to this account address, constituting a key-value pair. The aforementioned key can be sha3(Address), i.e., the hash value of the account address (using, for example, the sha3 algorithm), and the stored value can be rlp(Account), i.e., the RLP (Recursive Length Prefix) encoding of the account information. The account information is a quadruple consisting of [nonce, balance, storageRoot, codeHash]. For an Externally Owned Account (EOA), generally only nonce and balance exist, while storageRoot and codeHash fields store empty strings/all-zero strings by default. That is, externally owned accounts do not store contracts nor state variables generated after contract execution. Contract accounts include Nonce, Balance, Storage root, and CodeHash. Whether it is an externally owned account or a contract account, its account information is generally located in a single Leaf Node.

For a Contract Account (CA) in the state trie, its storage _Root points to another tree also in the form of an MPT, which stores data of state variables involved in contract execution. The tree in the form of an MPT pointed to by storage _Root is a Storage Trie, i.e., storage _Root stores the hash value of the root node of the Storage Trie. Generally, this Storage Trie also stores key-value pairs. The key indicates the address of the state variable, and its value can be the result of processing the declared position of the state variable in the contract (a value counted from 0) according to certain rules, for example, sha3(declared position of state variable) or sha3(contract name + declared position of state variable). The value is used to store the value of the state variable (e.g., an RLP-encoded value). Part of the data stored on the path from the root node to the leaf node constitutes the key, and the value is stored in the leaf node. In the State trie and the Storage trie therein, root nodes and intermediate nodes other than leaf nodes are represented by cloud shapes in FIG. 3 to indicate their flexible and complex structures.

As shown in FIG. 2, a Rollup Contract can be deployed on Layer 1 in Rollup. In Layer 2, initiated transactions can be received, such as Tx_21, Tx_22, etc., in the figure. A batch of transactions is called a transaction group (i.e., Batch), executed sequentially and updating states as a whole. As shown in FIGS. 1 and 2, assume Batch 1 may include three transactions: Tx_21, Tx_22, and Tx_23; and Batch 2 may include three transactions: Tx_24, Tx_25, and Tx_26. Transactions can be sorted in Layer 2 according to a rule, and then the sorted transactions can be executed sequentially, for example, sorted by timestamps in the transactions. After sequential execution of transactions in a Batch, the generated states may include several. For example, transactions in Batch 1 are:Tx_21: Alice→Bob 20; indicating Alice transfers 20 units of assets, e.g., Ether, to Bob;Tx_22: Alice→Charlie 10; indicating Alice transfers 10 units of assets, e.g., Ether, to Charlie;Tx _23: Bob→Charlie 10; indicating Bob transfers 10 units of assets, e.g., Ether, to Charlie.Before execution of transactions in Batch 1, assume there are 4 states, referred to herein as the initial state of Batch 1, i.e., the state values locked by Pre State Root in FIG. 3, which are:Alice: 50, Bob: 100, Charlie: 150, David: 200.After execution of transactions in Batch 1, these 4 states are updated to the final state of Batch 1, i.e., the state values locked by Post State Root in FIG. 3, which are:Alice: 20, Bob: 110, Charlie: 170, David: 200.

Merkle trees can be used in Layer 2 to organize the states before and after sequential execution of transactions in Batch 1. As shown in FIG. 3, transactions in a Batch and their related state changes can be organized together in Layer 2. For example, the Merkle root obtained by organizing the hash values of transactions in Batch 1 into a Merkle tree is locked in the Header of the Batch. This Header is similar to the block header in Layer 1, and this Merkle root is the Tx_Root in the Header of the Batch. Similarly, as mentioned above, the Merkle root obtained by organizing all state values before execution of transactions in Batch 1 into a Merkle tree can be locked in the Header of the Batch, i.e., Pre State Root; the Merkle root obtained by organizing the hashes of all state values after sequential execution of transactions in Batch 1 into a Merkle tree can be locked in the Header of the Batch, i.e., Post State Root. For Batch M, a Timestamp may also be set in its Header to record the generation time of the Batch, and certainly other field information may also be set. For the (M+1)-th Batch, the Pre State Root in its Header is equal to the Post State Root in the Header of the M-th Batch, as indicated by the connecting line between these two roots in FIG. 3. Thus, a chain structure is formed between Batches.

The Rollup mechanism of Layer 2 may include Optimistic-Rollup (OP-Rollup), ZK-Rollup (Zero-Knowledge Proof Rollup, where ZK refers to zero knowledge), TEE-Rollup mechanism, etc.

In the OP-Rollup mechanism, Layer 2 may be provided with: a receiver including a transaction pool (Txpool), a relayer, and a Sequencer. In ZK-Rollup and TEE-Rollup mechanisms, Layer 2 may also be provided with a Prover; wherein for the TEE-Rollup mechanism, the Prover may be set in a TEE.

The OP-Rollup mechanism is exemplarily described below. As shown in FIG. 3, assume transactions Tx21, Tx23, Tx25, Tx22, Tx26, and Tx24 are collected in the TxPool. The Sequencer sorts and packs these transactions according to their timestamps, for example, packing Tx21, Tx22, and Tx23 into Batch M, organizing the hash values of these transactions into a Merkle tree to generate a Merkle Root (i.e., transaction root), and filling the hash value of this Merkle Root into the Tx_Root in the Header of the generated Batch M. It should be noted that when calculating the root of the Merkle tree, generally for cases less than a power of 2, 2ⁿ, the last transaction can be duplicated to pad the count to a power of two, 2ⁿ, thereby calculating the root of a binary Merkle tree. As shown in FIG. 3, repeating the last Tx23 in chronological order pads the count to 4 transactions, reaching a power of two, 2², allowing calculation of the root of a binary Merkle tree. The Sequencer packs Tx21, Tx22, and Tx23 into Batch M+1 after sorting the transactions by timestamps.

Before the transaction sequence Tx21, Tx22, Tx23 in Batch M is executed, all states include, as mentioned above: Alice: 50, Bob: 100, Charlie: 150, David: 200. The Sequencer can organize these states into a Merkle tree and use the hash value of the root node of this Merkle tree as the pre-state root corresponding to Batch M, storing it in the Pre State Root field of the Header of Batch M. Then the Sequencer can execute the three transactions Tx21, Tx22, and Tx23 sequentially; the result of executing these three transactions generates new states, as mentioned above: Alice: 20, Bob: 110, Charlie: 170, David: 200. The Sequencer can organize these updated states into a Merkle tree and use the hash value of the root node of this Merkle tree as the post-state root corresponding to Batch M, storing it in the Post State Root field of the Header of Batch M.

Then, the Sequencer can send a transaction 1 invoking the Rollup Contract to Layer 1 via a Relayer. Transaction 1 contains some or all fields in the Header of Batch M and the compressed transaction sequence Tx21, Tx22, Tx23. After compression, Tx21, Tx22, and Tx23 occupy significantly less space. The interface invoked in the Rollup Contract may include storing the compressed transaction data (Tx21, Tx22, Tx23) in a cheaper (lower gas cost) location, calldata. In Ethereum smart contracts, calldata is a special data location used to store input data passed via function calls. Specifically, calldata is generally stored directly in Ethereum transaction data, which typically saves more gas than other data locations (such as memory and storage). Although the process of compressing the transaction sequence included in the transaction Batch is omitted herein, it is understandable that the transaction sequence included in any transaction Batch described below may be either an uncompressed transaction sequence or a compressed transaction sequence.

It is worth noting that in an Ethereum transaction, the signature part accounts for about half of the overall size, and its From field can be 0 bytes because the From field can be recovered from the signature. In Rollup, aggregation schemes such as BLS or others can usually be adopted, compressing the signature per transaction to about 0.5 bytes on average. Correspondingly, since the From field of a transaction cannot be recovered from such aggregated signatures in Rollup transactions, 4 bytes need to be separately used here for representation.

The BLS signature scheme was originally proposed by Stanford professor Dan Boneh et al. in 2001, constructed based on bilinear maps. Generally, a user's control over their own account is reflected in signing a transaction with their own private key. A single signature, as shown in the table above, may reach 68 bytes, occupying a relatively large size. For multiple transactions initiated by multiple accounts, each account needs to sign each of its own transactions separately. Signature aggregation can aggregate multiple signatures into one signature, thus greatly saving byte space for signatures. This aggregation can be aggregation of signatures on the same message by different signers, or aggregation of signatures on different messages. Public key aggregation can aggregate multiple different public keys into a total public key, by which the aggregated signature can be verified without requiring each public key to participate in the calculation when verifying the total signature. Signature aggregation can usually be implemented using Schnorr signature algorithms or BLS signature algorithms. Compared to Schnorr signature algorithms, aggregated signatures implemented by BLS signature algorithms are smaller in size, approximately half that of Schnorr.

The above compression scheme and signature aggregation using BLS are ideal design schemes. Nevertheless, in several practical Rollup schemes, a compressed transaction currently still occupies 40-50 bytes of space, excluding signatures, meaning BLS signature aggregation has not yet been adopted.

Continuing from above, after Layer 1 receives transaction 1 invoking the Rollup Contract, upon consensus, some nodes execute transaction 1 and generate a block, such as Block N in FIG. 3, including transaction 1 and its execution result along with other transactions and execution results. Said other transactions may include ordinary transfer transactions and transactions involving other smart contracts. Both ordinary transfer transactions and transactions involving other smart contracts may involve transaction execution. Especially transactions involving other smart contracts may involve relatively complex execution logic. Transaction 1 here invokes a function in the Rollup Contract to store data in the calldata location, mainly involving storing in a designated location, i.e., not involving execution of complex contract logic. That is to say, the main role of the Rollup Contract in Layer 1 is to store specified content from transactions sent from Layer 2 into designated locations, without involving complex execution logic. For example, as an example, Tx21, Tx22, and Tx23 are stored in Tx_12 locked into the transaction tree by Tx_Root in the Header of Block N. Additionally, as an implementation, Pre State Root and Post State Root in the Header of Batch M in transaction 1 can be stored in State 1 and State 2 in the contract state on Layer 1 respectively via the Rollup Contract. As mentioned above, State 1 and State 2 are contained in the state trie locked by State _Root in the Header of Block N, specifically for example in the storage trie. For distinction, State 1 and State 2 in the contract state on Layer 1 are referred to as Last State root and Current State root respectively. Furthermore, for simplification, only Current State root may be saved in the contract state on Layer 1 without saving Last State root, as shown in the code example below. In other implementations, Last State root and Current State root can also be stored in calldata in Layer 1 just like transactions in Layer 2, which will not be repeated here. For the former, for example, the following commitBatch() contract interface in Layer 1 is invoked: function CommitBatch(bytes[] calldata _transactions, bytes32 _preStateRoot, bytes32 _postStateRoot). Basic verification logic can be set inside the CommitBatch() contract interface, for example, including verifying whether Pre State Root in current transaction 1 equals Current State Root in contract storage; if equal, storing the Layer 2 transactions passed in transaction 1 into calldata, and updating Current State Root in contract storage to Post State Root.

Through the above manner, OP-Rollup can execute individual transactions in Layer 2 and bundle dozens, hundreds, or even more Layer 2 transactions in one Batch, publishing only minimal information to Layer 1. The so-called minimal information includes the compressed Layer 2 transactions and the hash values of state roots before and after execution of this batch of transactions as mentioned above. As shown above, this can be sent via one Layer 1 transaction, such as transaction 1 in FIG. 3. Thus, this is equivalent to executing a batch of transactions on Layer 2 at once but executing only one transaction on Layer 1. Meanwhile, OP-Rollup does not attach any proofs. This is based on the assumption that submitted Layer 2 information involves no fraud or malicious behavior, hence the name "Optimistic". Despite this assumption, for prevention and deterrence, submitters of Layer 2 information are still required to stake some Layer 1 assets (typically native tokens on-chain, such as Ether on Ethereum) in the Rollup Contract of OP-Rollup. For Layer 2 information submitted to Layer 1, although transactions therein are compressed, as mentioned above, they can still be used to reconstruct the execution process of all transactions and states of all accounts on Layer 2, thereby eliminating security risks caused by data availability on Layer 2.

Although OP-Rollup is optimistic, a challenge period can still be set on Layer 1, during which anyone can raise a challenge using fraud proofs. Typical reasons include challengers proving that a transaction in the Batch was not executed correctly, i.e., execution of the transaction did not produce the correct state. If a transaction in a Batch is proven invalid, the Batch is also invalid, and the Rollup contract on Layer 1 can roll back the Layer 2 Batch chain therein; the invalid Batch and all subsequent Batches become orphan blocks. Once a fraud proof succeeds, part of the deposit is paid to the challenger, and the remainder is burned. Conversely, if no fraud proof is submitted until the end of the challenge period, the Rollup contract can finalize this Batch. Fraud proofs are a data validity verification method adopted by Optimistic Rollup schemes. Currently, fraud proofs can be divided into single-round interactive and multi-round interactive types.

In an implementation of single-round interactive fraud proofs, disputed transactions are replayed on Layer 1 to detect invalid states before submission. For example, Alice as a validator synchronizes compressed OP-Rollup data to Layer 1 while staking a deposit. If challenger Bob disputes the data, he must initiate a challenge within the window period (challenge period) and also stake a deposit. The Rollup Contract of OP-Rollup will recalculate transactions in the block on Layer 1 to determine right or wrong. The deposit of the wrong party will be slashed, and the correct party will receive a reward.

It should be noted here that although calldata on Layer 1 contains all compressed transactions from Layer 2, during verification of fraud proofs, compressed transactions of Batch M in calldata are not directly extracted and executed. Instead, simulation execution is performed based on original texts of all transactions in Batch M submitted by the challenger. This is because compressed transactions of Batch M in calldata are generally only used to reconstruct the execution process of all transactions and states of all accounts on Layer 2 to eliminate security risks caused by data availability on Layer 2; moreover, authenticity of compressed transactions of Batch M in calldata without signatures is uncertain, whereas transactions submitted by the challenger are complete transactions whose validity can be verified; furthermore, initial states cannot be verified as contract storage contains only state roots rather than states, unless all transactions are re-executed sequentially starting from Batch 0 until obtaining all states after execution of Batch M-1, which is obviously uneconomical and inefficient.

The above single-round interactive fraud proof increases data that must be published on-chain and requires re-executing all transactions in Batch M on Layer 1, and replaying these transactions incurs huge fuel costs. Therefore, OP-Rollup is shifting towards multi-round interactive proofs to achieve the same goal with higher efficiency.

In multi-round interactive fraud proofs, after Bob challenges data synchronized by the Sequencer, the Sequencer needs to bisect the disputed Batch range into front and rear segments and return them via, for example, a dispute() contract interface. Then Bob further selects one bisected range to continue challenging, and the Sequencer bisects the disputed range again... This cycle continues until the disputed range is narrowed down to a specific transaction. Here Bob sends the original text of the challenged transaction (including signatures of each transaction) and the global state before execution of the transaction, and the Sequencer sends Pre State Root (also called state commitment) before execution and Post State Root after execution of the challenged transaction, for calculation and determination by the Rollup Contract on Layer 1. Specifically, for example, the Rollup Contract verifies the global state before execution of the challenged transaction based on Pre State Root before execution, executes the challenged transaction based on the global state before execution to generate the post-execution state, generates Post State Root based on the global state after execution, and compares it with Post State Root sent by the Sequencer; if different, the challenge succeeds; otherwise, the challenge fails. In practical applications, Arbitrum does not use bisection but K-section, dividing N instructions into N/K groups each time to find fraudulent instructions, which is more efficient.

Therefore, compared to single-round interaction, multi-round interaction can resolve disputes at lower cost. For example, the bisection protocol reduces the amount of data published on-chain (no need to publish state submissions for every transaction) and more easily supports complex smart contracts and handles higher-demand disputes. However, as the number of interactions increases, its dispute window period also becomes longer.

Overall, since OP-Rollup design requires placing data related to state updates and verification on Layer 1, OP-Rollup has the most limited scalability and throughput improvement, requiring a waiting period of 7 days or even longer. This means withdrawing assets from OP-Rollup incurs delay, requiring waiting for the window period to pass.

ZK-Rollup differs from Optimistic Rollup because ZK-Rollup uses Zero-Knowledge (ZK) proof technology. ZK refers to the ability to prove something (a transaction or state) to another party without disclosing necessary information. In ZK-Rollup, unlike OP-Rollup, Layer 2 also generates a proof (including proof) for transaction Batches (e.g., using cryptographic proof algorithms such as ZK-SNARK). The proof in this certificate can prove that Post State Root is obtained by correctly executing the transaction sequence in the corresponding transaction Batch sequentially based on Pre State Root. Verification of the proof alone suffices to confirm this, without needing to re-execute transactions in the Batch.

The proof generation process may involve the Sequencer packing all transactions in a Batch in Layer 2 (including sender, recipient, amount) along with Pre State Root, Post State Root, and Proving Key before and after execution of transactions in this Batch, and sending them to a prover on Layer 2. The prover converts this information into a special form called witness (selecting part as public input and part as private input). Then, the prover uses zero-knowledge proof computation circuits (a specific algorithm) arranged therein to verify validity and correctness of public input + private input. If verification is correct, circuit execution succeeds; otherwise, circuit execution fails. Upon successful circuit execution, the prover outputs a proof demonstrating that packed data is valid and correct. Moreover, this proof is small in size, generally only tens of bytes. The above proof generation process resembles re-execution and involves massive circuit computations, making it more complex and generally time-consuming. Note that private inputs cannot be reverse-engineered from the proof itself; only parties knowing zk-SNARK verification keys can verify proofs encrypted with corresponding creation keys. Public inputs can be used to verify validity and correctness of packed data but cannot be used to obtain specific contents of packed data.

Using zero-knowledge proofs, the prover can publish smaller proofs to Layer 1 via a Relayer for quick verification by the Rollup Contract. Small proof sizes further reduce Gas consumption on Layer 1. Moreover, in ZK-Rollup, this verification process is usually automatically completed by smart contracts without setting window periods like OP-Rollup, making asset withdrawal faster. This is one of the main characteristic differences between OP-Rollup and ZK-Rollup.

Specifically, the verification process first inputs public inputs (calculable from transaction 1 submitted in Block N, e.g., calculated by automatic execution logic in Rollup Contract when transaction 1 is submitted to Rollup Contract on Layer 1), proof, and verification key (verification key can be saved by governance contract on Layer 1 and provided to Rollup Contract) into verification logic in the smart contract (e.g., including ZK-SNARK verification algorithm). The verification logic checks whether the proof is valid using the verification algorithm. If valid, packed data corresponding to public inputs is deemed valid and correct. If verification succeeds, the verification algorithm outputs confirmation information proving packed data corresponding to public inputs is valid and correct; otherwise, it outputs error information indicating invalidity or incorrectness of data.

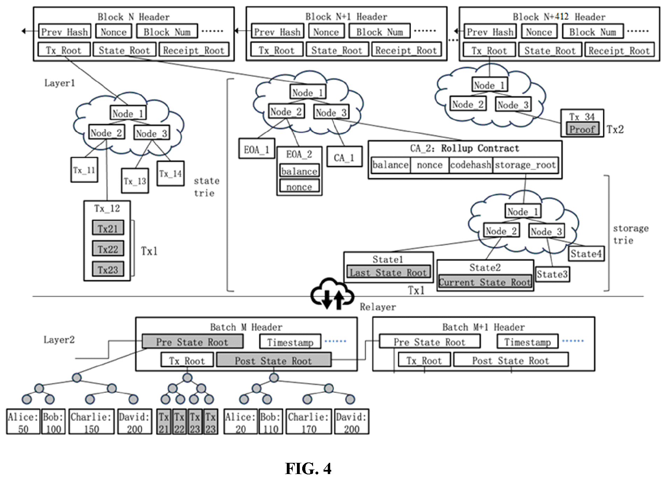

However, zero-knowledge proofs like ZK-SNARK require massive computation during proof generation, implying proof generation is time-consuming. Assume as shown in FIG. 4, compressed Tx21, Tx22, Tx23 are stored in calldata in Layer 1 via transaction 1, and Post State Root is stored in Current State Root in contract state on Layer 1. Transaction 1 is located in Block N of Layer 1 as shown in FIG. 4. Delay caused by complex computation needed to generate corresponding proof in Layer 2 may result in passing proof of Batch M to Block N+412 on Layer 1 via transaction 2 after some time. From Block N to Block N+412 obviously brings certain delay, potentially approaching hourly levels.

To address complex computation and long proof generation times, TEE-Rollup mechanism was proposed. TEE-Rollup differs from ZK-Rollup mainly in that: Prover is implemented using TEE (Trusted Execution Environment), and after verifying information such as transaction root, pre-state root, and post-state root of a transaction Batch provided by Sequencer, Prover signs relevant information of the transaction Batch using private keys in TEE, uses signatures as proofs, publishes them to Layer 1 via Relayer for quick verification by Rollup Contract.

After challenge periods corresponding to any transaction Batches submitted by Layer 2 end, or proofs corresponding to any transaction Batches pass verification in Layer 2's Rollup Contract, said any Batch and its corresponding contract invocation transaction (e.g., transaction 1 invoking CommitBatch() contract interface in Rollup Contract) enter an immutable state; simultaneously meaning individual transactions belonging to said any Batch in Layer 2 have entered an immutable state.

With development of Rollup technology, administrators of any blockchain system located in Layer 2 may desire supporting multiple Rollup modes between Layer 2 and Layer 1 blockchain systems for specific business purposes. Different Rollup modes do not necessarily imply adopting different Rollup mechanisms; for example, two Rollup modes may adopt identical Rollup mechanisms differing only in how Layer 1 stores packed transactions submitted by Layer 2. For instance, both Rollup Mode 1 and Rollup Mode 2 adopt ZK-Rollup mechanism; Rollup Mode 1 requires Layer 1 to store packed transactions from Layer 2 as original texts in Layer 1, whereas Rollup Mode 2 requires Layer 1 to store transaction hashes instead of original texts.

Although Layer 1 and Layer 2 represent blockchain systems above, understand that Layer 1 typically includes one blockchain system while Layer 2 may include one or more blockchain systems. One or more blockchain systems included in Layer 2 treat the blockchain system in Layer 1 as their respective upper-layer blockchain system.

If Rollup mechanisms adopted by Rollup modes differ, Rollup modes necessarily differ. Based on this, embodiments herein distinguish different Rollup modes primarily based on differences in Rollup mechanisms. Exemplarily, if ZK-Rollup mechanism is adopted between Layer 1 and Layer 2, corresponding Rollup mode remains denoted ZK-Rollup; if TEE-Rollup mechanism is adopted, corresponding Rollup mode remains denoted TEE-Rollup.

As Rollup modes increase, a resource management method supporting users managing Layer 2-related resources via Layer 1 more securely and conveniently is desired, such as starting/stopping certain Rollup modes per administrator needs and managing target resources held via multiple accounts belonging to multiple Rollup modes in Layer 2 per user needs.

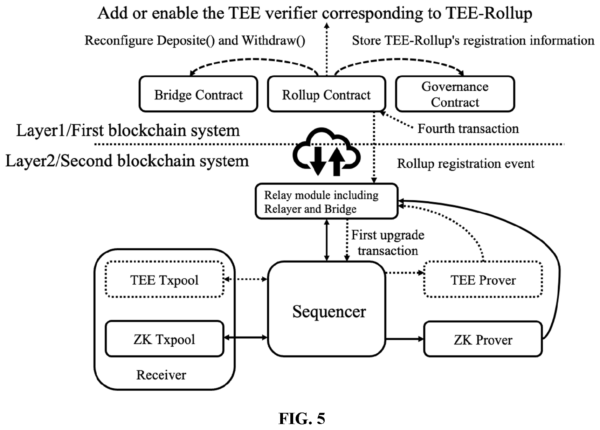

In view of the above problems, in the solution provided by the embodiments of this specification, referring to FIG. 5, at least a rollup contract (Rollup Contract) is deployed in Layer 1 (i.e., the first blockchain system), and the Rollup Contract includes a second method function for supporting registration of a rollup mode. A bridge contract (Bridge Contract) and a governance contract (Governance Contract) may further be deployed in the first blockchain system. The Bridge Contract is mainly responsible for managing the blockchain system in Layer 2, for example, managing accounts under the second blockchain system in Layer 2 and resources held by the accounts; the Governance Contract is mainly responsible for managing registration information of various rollup modes.

It should be noted that the Bridge Contract and the Governance Contract may not be independently deployed; instead, the method functions included therein for implementing corresponding functions may be directly integrated into the contract code of the Rollup Contract. The method functions included in the Bridge Contract and the Governance Contract, as well as the specific functions implemented thereby, will be described in detail below.

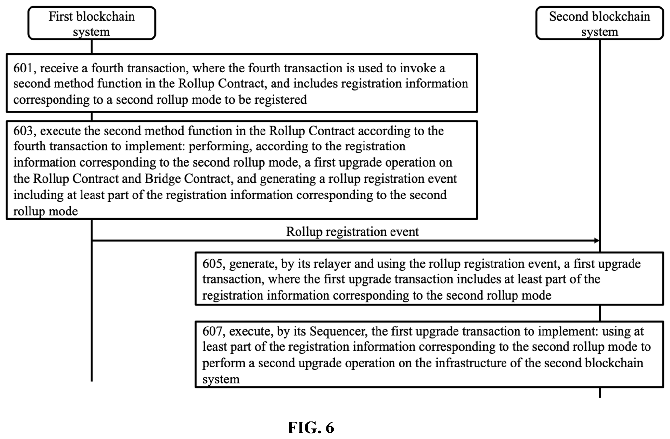

FIG. 6 is a first flowchart of a resource management method for a blockchain system provided in an embodiment of this specification. The method exemplarily describes a process of registering a new rollup mode (denoted as a second rollup mode) in the first blockchain system and the second blockchain system.

Referring to FIG. 6, the method may include, but is not limited to, the following steps S601 to S607.

Step S601: The first blockchain system receives a fourth transaction, where the fourth transaction is used to invoke the second method function in the Rollup Contract, and the fourth transaction includes registration information corresponding to the second rollup mode to be registered.

As described above, the second method function is used to support registration of a rollup mode.

Taking the case where the second rollup mode to be registered includes TEE-Rollup as an example, referring to FIG. 5. An administrator of the second blockchain system may initiate the fourth transaction in the first blockchain system, where the fourth transaction is used to invoke the second method function in the Rollup Contract, and the fourth transaction may include the registration information corresponding to TEE-Rollup. The registration information corresponding to TEE-Rollup may include, but is not limited to, one or more of the following items of information: identification information, a transaction sorting model, a verification method, and a genesis block; the transaction sorting model may include, but is not limited to, a consensus algorithm and an upper limit value of the number of transactions in a packed transaction.

Step S603: The first blockchain system executes the second method function in the Rollup Contract according to the fourth transaction to implement: performing, according to the registration information corresponding to the second rollup mode, a first upgrade operation on the Rollup Contract and the Bridge Contract, and generating a rollup registration event, where the rollup registration event includes at least part of the registration information in the registration information corresponding to the second rollup mode.

Taking the case where the second rollup mode to be registered includes TEE-Rollup as an example, referring to FIG. 5. The first upgrade operation performed on the Rollup Contract may include, but is not limited to, adding or enabling, in the Rollup Contract, a verification method TEE verifier corresponding to TEE-Rollup. The first upgrade operation performed on the Bridge Contract may include, but is not limited to, reconfiguring a contract interface Deposite() and a contract interface Withdraw() in the Bridge Contract, so that an account registered in the first blockchain system can, by invoking the contract interface Deposite(), implement adding a corresponding share of a second target resource to a certain sub-account belonging to TEE-Rollup in the second blockchain system; and so that, for a second target resource held by a certain sub-account belonging to TEE-Rollup in the second blockchain system, the contract interface Withdraw() can be invoked according to a corresponding policy to implement adding a corresponding share of a first target resource under an account corresponding to the sub-account in the first blockchain system.

When the first blockchain system executes the second method function in the Rollup Contract according to the fourth transaction, it may further implement storing, in the Governance Contract, the registration information corresponding to the second rollup mode, for example, storing the registration information of TEE-Rollup.

The aforementioned at least part of the registration information may include, but is not limited to, the identification information, the transaction sorting model, and the genesis block.

A relayer in the second blockchain system, for example, a shared Bridge included in the relayer, may listen to the rollup registration event in the first blockchain system, and then, by using the at least part of the registration information included in the rollup registration event, perform a second upgrade operation on infrastructure of the second blockchain system, so that network rollup can be implemented through the newly registered second rollup mode between the first blockchain system after the first upgrade operation and the second blockchain system after the second upgrade operation.

The aforementioned shared Bridge may exist as an independent service or in the form of an SDK. The Bridge may hold a relay account registered in the first blockchain system by the administrator of the second blockchain system and a private key corresponding to the relay account; and then the Bridge implements, according to certain rules, generating a transaction by using the relay account and sending the transaction to the first blockchain system, and implements, according to certain rules, generating a transaction and sending the transaction to the Sequencer in the second blockchain system.

Exemplarily, the second blockchain system may, for example, execute the following steps S605 and S607 based on the rollup registration event.

Step S605: The second blockchain system generates, by using the relayer thereof and the rollup registration event, a first upgrade transaction, where the first upgrade transaction includes at least part of the registration information in the registration information corresponding to the second rollup mode.

The first upgrade transaction may be a special transaction, which may not be packed into the packed transaction submitted by the second blockchain system. Exemplarily, the Bridge included in the relayer may, by performing special settings on a sender field and a recipient field of the first upgrade transaction, for example, setting the From field to the relay account and the To field to Null, enable the Sequencer of the second blockchain system to accurately know that the first upgrade transaction is a special transaction, execute the transaction intended to be executed by the first upgrade transaction and not pack it into a batch; a Data field of the first upgrade transaction may include the at least part of the registration information included in the rollup registration event.

Step S607: The second blockchain system executes the first upgrade transaction through the Sequencer thereof to implement: performing, by using the at least part of the registration information in the registration information corresponding to the second rollup mode, the second upgrade operation on the infrastructure of the second blockchain system.

Taking the case where the second rollup mode to be registered includes TEE-Rollup as an example, referring to FIG. 5. The shared Bridge of the second blockchain system may, for example, send the first upgrade transaction to the Sequencer, where the first upgrade transaction includes the at least part of the registration information included in the registration information of TEE-Rollup. When the Sequencer of the second blockchain system executes the first upgrade transaction, the second upgrade operation performed on the infrastructure of the second blockchain system may include, but is not limited to: configuring, in the receiver, a transaction pool TEE Txpool corresponding to TEE-Rollup; reconfiguring the Sequencer so that the reconfigured Sequencer can process transactions in the TEE Txpool according to the identification information, the transaction sorting model, and the genesis block of TEE-Rollup; and deploying, in the second blockchain system, a prover TEE Prover corresponding to TEE-Rollup.

The foregoing exemplarily describes, with reference to FIG. 5 and FIG. 6, the process of registering TEE-Rollup. However, it is not difficult to understand that other rollup modes may also be registered through a process similar to the foregoing, for example, registering ZK-Rollup or other rollup modes, so that the first blockchain system and the second blockchain system can simultaneously support M types of rollup modes greater than 1.

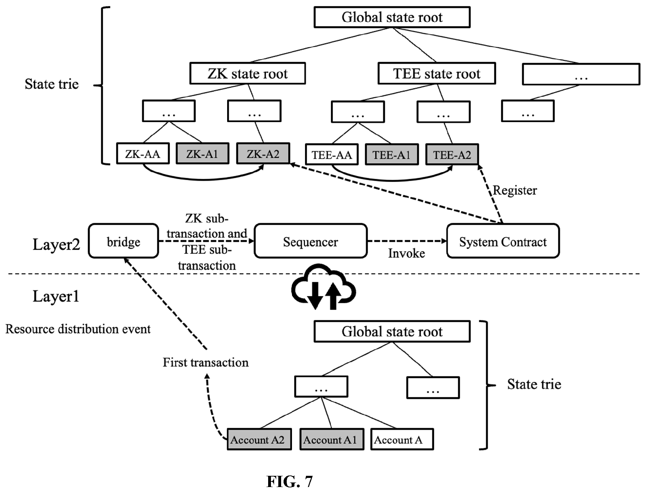

Referring to FIG. 7, in the case where the second blockchain system supports M types of rollup modes greater than 1, the second blockchain system may maintain M account sets for the M types of rollup modes, that is, any user, for example, user 1, may correspond to one or more accounts not greater than M in the second blockchain system. Correspondingly, a state tree (state trie) corresponding to a world state of the second blockchain system may include M sub-state trees corresponding to the M types of rollup modes, and a state root corresponding to the world state of the second blockchain system (i.e., the Global state root) can be calculated by using the respective state roots corresponding to the M sub-state trees.

Based on this, on the basis of the foregoing steps S601 to S607, the Sequencer may further initialize, in the second blockchain system, a sub-state tree corresponding to the second rollup mode, including registering, in the sub-state tree corresponding to the second rollup mode, a relay sub-account belonging to the second rollup mode and corresponding to the relay account, for example, performing derivation calculation based on the relay account corresponding to the second blockchain system and the second rollup mode to obtain the relay sub-account belonging to the second rollup mode and corresponding to the relay account, and registering it into the sub-state tree corresponding to the second rollup mode through a system contract (System Contract) in the second blockchain system.

The algorithm used to perform derivation calculation on an account (including the relay account) registered in the first blockchain system may be predetermined, and the embodiments of this specification do not limit the algorithm used to perform derivation calculation. In a typical example, for the relay account A registered in the first blockchain system, for example, a hash value corresponding to the relay account A and the identification information of the second rollup mode may be calculated, and the first x bits in the hash value may be taken as the relay sub-account belonging to the second rollup mode and corresponding to the relay account.

Referring to FIG. 7, in the case where the first blockchain system includes a relay account A registered by the administrator of the second blockchain system and corresponding to the second blockchain system, if the M types of rollup modes supported by the second blockchain system include ZK-Rollup and TEE-Rollup, then the sub-state tree corresponding to ZK-Rollup may include a relay sub-account ZK-AA corresponding to the account A, while the sub-state tree corresponding to TEE-Rollup may include a relay sub-account TEE-AA corresponding to the account A.

Similarly, in order to reduce the number of accounts that a user needs to maintain in the first blockchain system and the second blockchain system, thereby improving user experience, an account of any user, for example, user 1, under any rollup mode in the second blockchain system serves as a sub-account corresponding to a certain account registered by the user 1 in the first blockchain system. Exemplarily, referring to FIG. 7, similar to the aforementioned relay sub-account ZK-AA and relay sub-account TEE-AA both corresponding to the account A, an account ZK-A1 belonging to ZK-Rollup and an account TEE-A1 belonging to TEE-Rollup both correspond to an account A1 registered by the user 1 in Layer 1.

An account ZK-A1 of any user, for example, user 1, under ZK-Rollup may be obtained by performing derivation calculation based on the account A1 and the rollup mode ZK-Rollup; similarly, an account TEE-A1 of the user 1 under TEE-Rollup may be obtained by performing derivation calculation based on the account A1 and the rollup mode TEE-Rollup. Alternatively, the second blockchain system may also, by directly maintaining a mapping relationship table, implement constructing and storing a correspondence between an account A1 of any user, for example, user 1, in the first blockchain system and an account of the user under any rollup mode in the second blockchain system.

Since the account A1 registered by the user 1 in the first blockchain system has a correspondence with the respective accounts of the user 1 in the second blockchain system, for example, the account ZK-A1 and the account TEE-A1, the user 1 may reuse the account A1 registered in the first blockchain system and the corresponding public-private key pair to implement initiating corresponding transactions as needed in the second blockchain system. Correspondingly, a client of the second blockchain system may not present, to the user 1, the account ZK-A1 thereof under ZK-Rollup and the account TEE-A1 thereof under TEE-Rollup, and only needs to present to the user 1: the share of the first target resource held by the account of the user 1 under ZK-Rollup, and the share of the first target resource held by the account of the user 1 under TEE-Rollup.

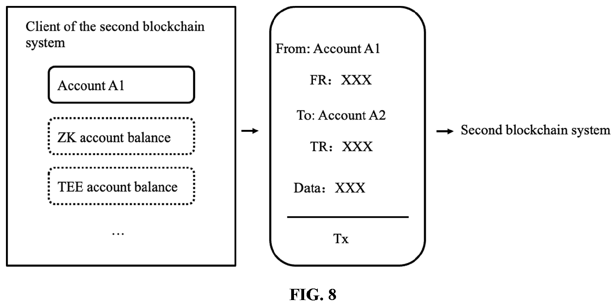

Exemplarily, referring to FIG. 8, the client of the second blockchain system may present, to the user 1, only the account A1 registered by the user 1 in the first blockchain system; when the user 1 holds the second target resource under any rollup mode, for example, ZK-Rollup and TEE-Rollup, the client of the second blockchain system may further present, to the user 1, the share of the second target resource held by the sub-account thereof under ZK-Rollup (i.e., the ZK account balance), and may further present, to the user 1, the share of the second target resource held by the sub-account thereof under TEE-Rollup (i.e., the TEE account balance), but does not present the account ZK-A1 and the account TEE-A1 thereto.

When the user 1 desires to initiate a transaction Tx in the second blockchain system to achieve a certain business purpose, the user 1 may initiate the transaction Tx by using the account A1 registered in the first blockchain system. Taking the case where the user 1 needs to transfer the second target resource held thereby to user 2 as an example, the From field and the To field in the transaction Tx may respectively include the account A1 and the account A2 registered by the user 1 and the user 2 in the first blockchain system; in addition, the transaction Tx may further include an indication field (denoted as FR) corresponding to the From field and an indication field (denoted as TR) corresponding to the To field. Wherein: the field value under the FR field is used to indicate the rollup mode to which the sub-account that corresponds to the account A1 and from which the second target resource needs to be transferred out through the transaction Tx belongs; the field value under the TR field is used to indicate the rollup mode to which the sub-account that corresponds to the account A2 and to which the second target resource needs to be transferred in through the transaction Tx belongs.

In view of the fact that the respective sub-accounts of the user 1 belonging to the M rollup modes in the second blockchain system all have a correspondence with the account A1 registered thereby in the first blockchain system, and the respective sub-accounts of the user 2 belonging to the M rollup modes in the second blockchain system all have a correspondence with the account A2 registered thereby in the first blockchain system, the second blockchain system can learn, based on the transaction Tx, the sub-account from which the second target resource actually needs to be transferred out and the sub-account to which the second target resource actually needs to be transferred in, in the transaction Tx, thereby completing, by executing the transaction Tx, the resource transfer transaction intended to be completed by the transaction Tx.

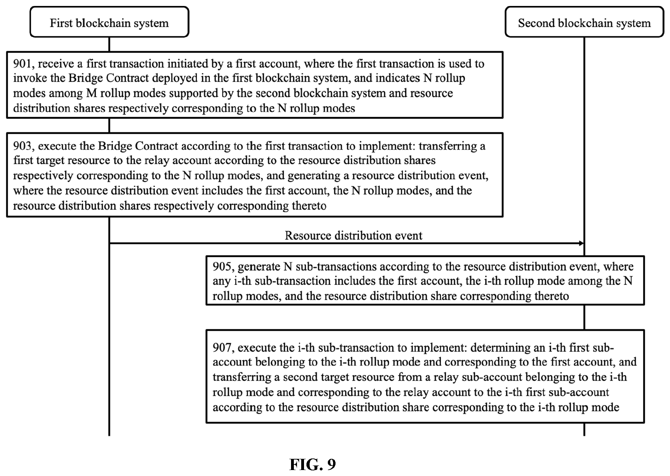

FIG. 9 is a second flowchart of a resource management method for a blockchain system provided in an embodiment of the present specification. The method exemplarily describes the process in which, where the second blockchain system supports M rollup modes, any first user adds a second target resource to a sub-account thereof in the second blockchain system through a first account registered thereby in the first blockchain system.

Referring to FIG. 9, the method may include but is not limited to the following Step S901 to Step S907.

Step S901: the first blockchain system receives a first transaction initiated by the first account, where the first transaction is used to invoke the Bridge Contract deployed by the first blockchain system, and the first transaction indicates N rollup modes among the M rollup modes supported by the second blockchain system, as well as the resource distribution share respectively corresponding to each of the N rollup modes.

The first user may initiate the first transaction through the first account registered thereby in the first blockchain system.

The From field of the first transaction may include the first account, the To field may include the contract account corresponding to the Bridge Contract, and the Data field may include the N rollup modes among the M rollup modes supported by the second blockchain system, as well as the resource distribution share respectively corresponding to each of the N rollup modes. In addition, the Data field of the first transaction may further include the identification information of the second blockchain system, as well as the identification information of the method function/contract interface in the Bridge Contract that the first transaction is expected to invoke, for example, the identification information of the contract interface Deposite() in the Bridge Contract.

Step S903: the first blockchain system executes the Bridge Contract according to the first transaction, to implement: transferring the first target resource to a relay account according to the resource distribution share respectively corresponding to each of the N rollup modes, and generating a resource distribution event, where the resource distribution event includes the first account, the N rollup modes, and the resource distribution share respectively corresponding thereto.

The first blockchain system may, for example, execute the Deposite() in the Bridge Contract according to the first transaction, to implement generating the resource distribution event. In one possible implementation, the resource distribution event may further include the identification information of the second blockchain system.

In order to ensure the reliability of the resource transfer, the administrator of the second blockchain system may register, in the first blockchain system, the relay account corresponding to the second blockchain system, for example, the account A.

The Bridge Contract may further store the resource distribution event through a corresponding asset transfer event list or other means.

The relayer in the second blockchain system, for example, the shared Bridge included in the relayer, may listen to the resource distribution event generated by the first blockchain system, and execute the following Step S905 based on the listened resource distribution event.

In order to ensure security, the Bridge included in the relayer of the second blockchain system may further query, from the first blockchain system, the simplified payment verification (SPV) proof corresponding to the resource distribution event, and execute the following Step S905 only after determining, through the SPV proof, that the block to which the first transaction belongs has been successfully submitted in the first blockchain system.

Step S905: the second blockchain system generates N sub-transactions according to the resource distribution event, where any i-th sub-transaction includes the first account, the i-th rollup mode among the N rollup modes, and the resource distribution share corresponding thereto.

In the i-th sub-transaction, the From field may include the relay account, the To field may include the first account, the Data field may include the resource distribution share corresponding to the i-th rollup mode, and the rollup modes included in the FR field corresponding to the From field and the TR field corresponding to the To field are both the i-th rollup mode. Referring to FIG. 7, it is assumed here that the N rollup modes include TEE-Rollup and ZK-Rollup, then the Bridge may generate a TEE sub-transaction and a ZK sub-transaction according to the resource distribution event: in the ZK sub-transaction, the rollup modes included in the FR field corresponding to the From field and the TR field corresponding to the To field are both ZK-Rollup; whereas in the TEE sub-transaction, the rollup modes included in the FR field corresponding to the From field and the TR field corresponding to the To field are both TEE-Rollup.

Step S907: the second blockchain system executes the i-th sub-transaction, to implement: determining the i-th first sub-account that belongs to the i-th rollup mode and corresponds to the first account, and according to the resource distribution share corresponding to the i-th rollup mode, transferring the second target resource to the i-th first sub-account from the relay sub-account that belongs to the i-th rollup mode and corresponds to the relay account.

The second blockchain system may execute the i-th sub-transaction through its Sequencer. In combination with the foregoing, it can be understood that when the Sequencer executes the i-th sub-transaction: in one possible implementation, the i-th first sub-account may be obtained by performing a derivation calculation using the first account and the i-th rollup mode included in the i-th sub-transaction; in another possible implementation, the i-th first sub-account may be obtained by querying a mapping relationship table maintained in the second blockchain system.

After the Sequencer obtains the i-th first sub-account, it may query the i-th first sub-account in the sub-state tree corresponding to the i-th rollup mode. If the i-th first sub-account cannot be queried from the sub-state tree corresponding to the i-th rollup mode, then the i-th first sub-account may be registered in the corresponding sub-state tree by invoking the system contract of the second blockchain system.

Referring to FIG. 7, it is assumed that the first account includes the account A2, and the N rollup modes include TEE-Rollup and ZK-Rollup.

If, in the process of executing the ZK sub-transaction, the Sequencer cannot query the sub-account ZK-A2 corresponding to the account A2 from the sub-state tree corresponding to ZK-Rollup, the Sequencer may invoke the System Contract of the second blockchain system, to implement registering the sub-account ZK-A2 in the sub-state tree corresponding to ZK-Rollup; if, in the process of executing the TEE sub-transaction, the Sequencer likewise cannot query the sub-account TEE-A2 corresponding to the account A2 from the sub-state tree corresponding to TEE-Rollup, the Sequencer may then invoke the System Contract of the second blockchain system, to implement registering the sub-account TEE-A2 in the sub-state tree corresponding to TEE-Rollup.

Where the sub-state tree corresponding to the i-th rollup mode already includes the i-th first sub-account, the Sequencer of the second blockchain system can, based on the resource distribution share included in the i-th sub-transaction, transfer the second target resource to the i-th first sub-account from the relay sub-account that belongs to the i-th rollup mode and corresponds to the relay account.

Continuing the foregoing example and continuing to refer to FIG. 7, the Sequencer may, for example, transfer the second target resource from ZK-AA to the sub-account ZK-A2 according to the resource distribution share included in the ZK sub-transaction, and transfer the second target resource from TEE-AA to the sub-account ZK-A2 according to the resource distribution share included in the TEE sub-transaction.

Alternatively, depositing the second target resource into the i-th first sub-account may also be implemented through other means than the foregoing Step S907. Exemplarily, when the second blockchain system executes the i-th sub-transaction, it may implement: determining the i-th first sub-account that belongs to the i-th rollup mode and corresponds to the first account, and minting the second target resource for the i-th first sub-account according to the resource distribution share corresponding to the i-th rollup mode. That is, under this implementation, there is no need to transfer out the second target resource from the relay sub-account that belongs to the i-th rollup mode and corresponds to the relay account; instead, the corresponding share of the second target resource is minted for the i-th first sub-account.

Taking into account that the i-th sub-transaction may fail in execution, after the batch to which the i-th sub-transaction belongs is successfully submitted to the first blockchain system, for example, after the proof data corresponding to the batch to which the i-th sub-transaction belongs is submitted to the first blockchain system and passes verification, thereby causing the i-th sub-transaction and the batch to which it belongs to enter the immutable state, then, relying on the fact that the Rollup Contract in the first blockchain system can perceive that the i-th sub-transaction has entered the immutable state, at this time the Rollup Contract may further generate, by invoking the Bridge Contract, the i-th asset transfer complete event corresponding to the i-th sub-transaction, where the asset transfer complete event may, for example, include the first account, the i-th rollup mode, and the resource distribution share corresponding thereto; further, after the Bridge Contract collects the N asset transfer complete events corresponding to the N sub-transactions, the Bridge Contract may, based on the content included in the N asset transfer complete events and the foregoing resource distribution event, confirm that the N asset transfer complete events are successfully matched with the foregoing resource distribution event, thereby confirming that the transactions that the first transaction is expected to execute have all been successfully executed.

Correspondingly, if the Bridge Contract fails to completely collect the N asset transfer complete events corresponding to the N sub-transactions, it indicates that some or all of the sub-transactions have failed to be successfully executed in the second blockchain system; in this case, the administrator of the Bridge Contract may, for example, determine, according to the resource distribution event and the collected asset transfer complete events, the compensation share of the first target resource that needs to be returned from the relay account to the first account, thereby implementing, through a corresponding contract invocation transaction or other means, transferring the first target resource from the relay account to the first account according to the compensation share.

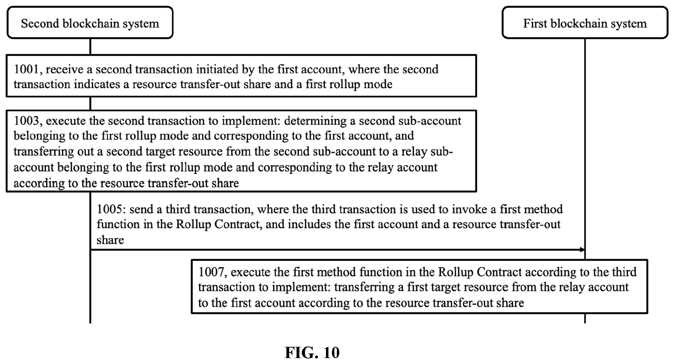

FIG. 10 is a third flowchart of a resource management method for a blockchain system provided in an embodiment of the present specification. The method exemplarily describes the process in which, where the second blockchain system supports M rollup modes, any first user adds, according to the second target resource held by a sub-account thereof belonging to any first rollup mode in the second blockchain system, a corresponding share of the first target resource to the first account registered by the first user in the first blockchain system.

Referring to FIG. 10, the method may include but is not limited to the following Step S1001 to Step S1007.

Step S1001: the second blockchain system receives a second transaction initiated by the first account, where the second transaction indicates a resource transfer-out share and the first rollup mode. The first rollup mode belongs to the M rollup modes supported by the second blockchain system.

In combination with the data format of the transaction Tx initiated by the user in the second blockchain system exemplarily described above. The From field of the second transaction may, for example, include the first account, and the rollup mode included in the FR field corresponding to the From field may be the first rollup mode; the Data field of the second transaction may, for example, include the resource transfer-out share. In addition, the To field of the second transaction and its corresponding TR field may be set according to a preset rule, for example: both the To field and the TR field are Null; or the To field and the From field include the same first account, and the TR field and the FR field include the same first rollup mode.

After receiving the second transaction, the receiver of the second blockchain system may, according to the first rollup mode included in the FR field corresponding to the sender field in the second transaction, add the second transaction to the transaction pool corresponding to the first rollup mode.

Step S1003: the second blockchain system executes the second transaction, to implement: determining the second sub-account that belongs to the first rollup mode and corresponds to the first account, and according to the resource transfer-out share, transferring out the second target resource from the second sub-account to the relay sub-account that belongs to the first rollup mode and corresponds to the relay account.

The Sequencer of the second blockchain system may pull a plurality of transactions from the transaction pool corresponding to the first rollup mode, sort and execute them, and generate a corresponding packed transaction. In combination with the foregoing, it can be understood that when the Sequencer executes the second transaction: in one possible implementation, the second sub-account that belongs to the first rollup mode and corresponds to the first account may be obtained by performing a derivation calculation using the first account and the first rollup mode included in the second transaction; in another possible implementation, the second sub-account may be obtained by querying a mapping relationship table maintained in the second blockchain system.

It should be noted that when the Sequencer executes the second transaction, it can, based on the special structure of the second transaction, for example: both the To field and the TR field are Null, or the To field and the From field include the same first account while the TR field and the FR field include the same first rollup mode, trigger the second blockchain system to generate a third transaction corresponding to the second transaction. For example, when the Sequencer executes the second transaction, it may, based on the foregoing special structure, generate a resource extraction event, which includes the first account and the resource transfer-out share, and may in addition include the batch number of the third batch to which the second transaction belongs in the second blockchain system; the Bridge of the second blockchain system may, for example, generate the third transaction according to the resource extraction event.

Correspondingly, Step S1005: the second blockchain system sends a third transaction to the first blockchain system, where the third transaction is used to invoke the first method function in the Rollup Contract, and the third transaction includes the first account and the resource transfer-out share.

In order to ensure that the first blockchain system can determine whether the second transaction corresponding to the third transaction has been successfully executed, the third transaction may further include the batch number of the third batch to which the second transaction belongs, and in addition the third transaction may further include the transaction index of the second transaction in the third batch. Moreover, the Bridge of the second blockchain system may further send the third transaction to the first blockchain system only after the relayer has completed submitting the proof data corresponding to the third batch to the first blockchain system.

Correspondingly, in Step S1007, the first blockchain system executes the first method function in the Rollup Contract according to the third transaction, to implement: transferring the first target resource from the relay account to the first account according to the resource transfer-out share.

Where the third transaction includes the foregoing batch number and transaction index, when the first blockchain system executes the first method function in the Rollup Contract according to the third transaction, it may specifically implement: first determining, according to the batch number of the third batch included in the third transaction, whether the third batch has entered the immutable state, and if so, querying, according to the transaction index included in the third transaction, whether the third batch includes the second transaction corresponding to the third transaction, and if so, transferring the first target resource from the relay account to the first account according to the resource transfer-out share. It can be understood that the matching of the second transaction and the third transaction means that the second transaction and the third transaction both include the same first account and resource transfer-out share.

When the first blockchain system executes the third transaction, the third batch to which the second transaction belongs may not yet have entered the immutable state. In this case, when the first blockchain system executes the first method function in the Rollup Contract according to the third transaction, it may set a trigger condition in the Rollup Contract according to the batch number of the third batch to which the second transaction belongs and the transaction index of the second transaction in the third batch; after the second blockchain system completes submitting the proof data of the third batch to which the second transaction belongs to the Rollup Contract, and the proof data passes verification so that the third batch to which the second transaction belongs enters the immutable state, the trigger condition set in the Rollup Contract is satisfied, thereby correspondingly triggering the first method function to continue querying, according to the transaction index included in the third transaction, whether the third batch includes the second transaction corresponding to the third transaction, and if so, transferring the first target resource from the relay account to the first account according to the resource transfer-out share.

In one possible implementation, when the first target resource needs to be transferred from the relay account to the first account, the first method function in the Rollup Contract may invoke the contract interface Withdraw() in the Bridge Contract, thereby completing, through the contract interface Withdraw(), transferring the first target resource from the relay account to the first account according to the resource transfer-out share.

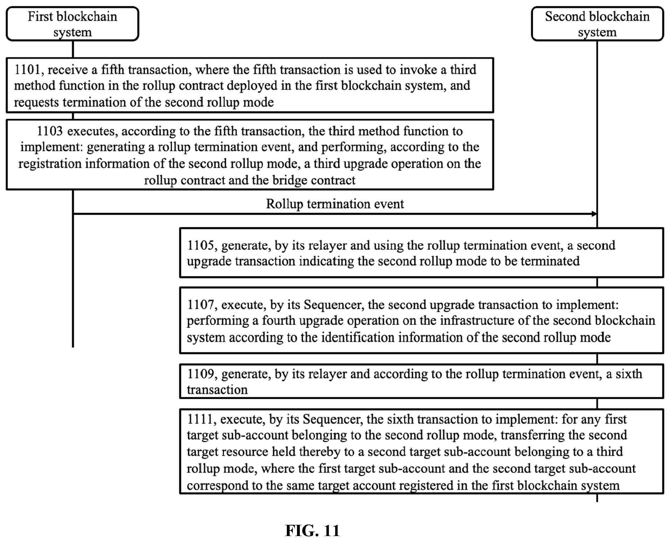

FIG. 11 is a fourth flowchart of a resource method for a blockchain system provided in an embodiment of the present specification. The method exemplarily describes the process of terminating a rollup mode (denoted as the second rollup mode) in the first blockchain system and the second blockchain system.

Referring to FIG. 11, the method may include but is not limited to the following Step S1101 to Step S1107.

Step S1101: the first blockchain system receives a fifth transaction, where the fifth transaction is used to invoke the third method function in the Rollup Contract, and the fifth transaction requests termination of the second rollup mode.

The administrator of the second blockchain system may initiate the fifth transaction in the first blockchain system, where the fifth transaction is used to invoke the third method function in the Rollup Contract, in which the second rollup mode that needs to be terminated may be indicated.

Step S1103: the first blockchain system executes the third method function according to the fifth transaction, to implement: generating a rollup termination event, and performing a third upgrade operation on the rollup contract and the bridge contract according to the registration information of the second rollup mode.

The third upgrade operation corresponds to the foregoing first upgrade operation.

Taking the case where the second rollup mode to be terminated includes TEE-Rollup as an example. The third upgrade operation performed on the Rollup Contract may include but is not limited to deleting or disabling, in the Rollup Contract, the verification method TEE verifier corresponding to TEE-Rollup. The third upgrade operation performed on the Bridge Contract may include but is not limited to reconfiguring the contract interface Deposite() and the contract interface Withdraw() in the Bridge Contract, so that an account registered in the first blockchain system can no longer, by invoking the contract interface Deposite(), implement adding a corresponding share of the second target resource to a certain sub-account belonging to TEE-Rollup in the second blockchain system; and so that a certain sub-account belonging to TEE-Rollup in the second blockchain system can no longer, based on the share of the second target resource held thereby, implement, through the contract interface Withdraw(), adding the first target resource under the account corresponding to the sub-account in the first blockchain system.

The rollup termination event may indicate the second rollup mode to be terminated, for example, including the identification information of the second rollup mode.

The relayer in the second blockchain system, for example, the Bridge included in the relayer, may listen to the rollup termination event, and further perform, according to the third rollup mode indicated by the rollup termination event, a fourth upgrade operation on the infrastructure of the second blockchain system, so that rollup using the second rollup mode is no longer supported between the first blockchain system after the third upgrade operation and the second blockchain system after the fourth upgrade operation.

Exemplarily, the second blockchain system may, for example, execute the following Step S1105 and Step S1107 based on the rollup registration event.

Step S1105: the second blockchain system, through its relayer, generates a second upgrade transaction using the rollup termination event, where the second upgrade transaction indicates the second rollup mode to be terminated.

The second upgrade transaction may be a special transaction, which may not be packed into the packed transaction submitted by the second blockchain system. Exemplarily, the Bridge included in the relayer may, by performing a special setting on the sender field and the recipient field of the first upgrade transaction, for example, setting the From field as the relay account and the To field as Null, enable the Sequencer of the second blockchain system to accurately learn that the second upgrade transaction is a special transaction, execute the transaction that the second upgrade transaction is expected to execute and not pack it into a batch; the Data field of the second upgrade transaction may include the identification information of the second rollup mode.

Step S1007: the second blockchain system executes the second upgrade transaction through its Sequencer, to implement: performing a fourth upgrade operation on the infrastructure of the second blockchain system according to the identification information of the second rollup mode.

Taking the case where the second rollup mode to be terminated includes TEE-Rollup as an example. The shared Bridge of the second blockchain system may, for example, send the second upgrade transaction to the Sequencer, where the second upgrade transaction includes the identification information of TEE-Rollup. When the Sequencer of the second blockchain system executes the second upgrade transaction, the fourth upgrade operation performed on the infrastructure of the second blockchain system may include but is not limited to: deleting or disabling, in the receiver, the transaction pool TEE Txpool corresponding to TEE-Rollup; reconfiguring the Sequencer so that the reconfigured Sequencer no longer processes the transactions in the TEE Txpool; and deleting or disabling, in the second blockchain system, the prover TEE Prover corresponding to TEE-Rollup.

In one possible implementation, relying on the rollup termination event corresponding to the second rollup mode, the second blockchain system may further continue to execute Step S1109 and Step S1111, to complete transferring the second target resource held by the first target sub-account that belongs to the second rollup mode and corresponds to any account (denoted as a target account) to the second target sub-account that belongs to the third rollup mode and corresponds to the target account, where the target account refers to an external account registered in the first blockchain system.

Step S1109: the second blockchain system, through its relayer, generates a sixth transaction according to the rollup termination event.

The second upgrade transaction may be a special transaction, which may not be packed into the packed transaction submitted by the second blockchain system. Exemplarily, the Bridge included in the relayer may, by performing a special setting on the sender field and the recipient field of the sixth transaction, for example, setting both the From field and the To field as Null, and setting both the FR field corresponding to the From field and the TR field corresponding to the To field as the second rollup mode, enable the Sequencer of the second blockchain system to accurately learn that the sixth transaction is a special transaction, execute the transaction that the sixth transaction is expected to execute and not pack it into a batch.

Step S1111: the second blockchain system executes the sixth transaction through its Sequencer, to implement: for any first target sub-account belonging to the second rollup mode, transferring the second target resource held thereby to the second target sub-account belonging to the third rollup mode, where the first target sub-account and the second target sub-account correspond to the same target account registered in the first blockchain system.

Referring to FIG. 7, continuing the foregoing example, it is further assumed that the terminated second rollup mode is TEE-Rollup, and it is assumed that the third rollup mode includes ZK-Rollup. Then, the second target resource held by the account TEE-A1 may be transferred to the account ZK-A1, and the second target resource held by the account TEE-A2 may be transferred to the account ZK-A2.

When the second rollup mode is terminated, transferring the target resource held by any first target sub-account belonging to the second rollup mode may also be implemented through other means than the foregoing Step S1109 and Step S1111. For example, the Bridge included in the relayer of the second blockchain system may generate a target transaction, where the target transaction is used to invoke a certain preset method function in the Rollup Contract deployed by the first blockchain system, and when the first blockchain system executes the preset function according to the target transaction, for any first target sub-account belonging to the second rollup mode, it transfers, according to the current share of the second target resource held thereby, the first target resource from the relay account corresponding to the second blockchain system to the target account registered in the first blockchain system.

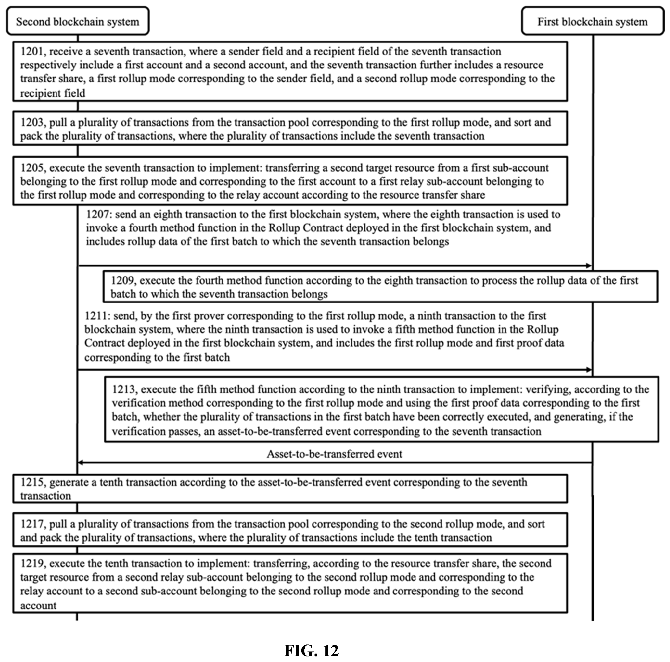

FIG. 12 is a fifth flowchart of a resource management method for a blockchain system provided in an embodiment of the present specification. The method exemplarily describes the process of, in the second blockchain system supporting M rollup modes, transferring a resource from a first sub-account that belongs to a first rollup mode and corresponds to a first account to a second sub-account that belongs to a second rollup mode and corresponds to a second account.

First, in Step S1201, the second blockchain system receives a seventh transaction, where the sender field and the recipient field of the seventh transaction respectively include the first account and the second account, and the seventh transaction further includes a resource transfer share, the first rollup mode corresponding to the sender field, and the second rollup mode corresponding to the recipient field.

The following description is given mainly by way of example where the first rollup mode includes ZK-Rollup, the second rollup mode includes TEE-Rollup, the first account includes the account A1, the second account includes the account A2, the relay account includes the account A, and the resource transfer share is T.

The seventh transaction may be initiated by a user 1 who holds the account A1 through a client of the second blockchain system.

On the basis of the foregoing example, for the seventh transaction: the From field (i.e., the sender field) may include the account A1, the To field (i.e., the recipient field) may include the account A2, the FR field corresponding to the From field may include ZK-Rollup, the TR field corresponding to the To field may include TEE-Rollup, and the Data field may include the resource transfer share T.

The second blockchain system can not only receive a transaction from its client, but may itself also initiate a transaction that needs to be executed by the second blockchain system through the shared Bridge included in the relayer; for example, the Bridge may initiate the foregoing ZK sub-transaction and TEE sub-transaction, and so on. For a transaction that needs to be executed by the second blockchain system, the transaction may be added to the corresponding transaction pool according to the field value under the FR field corresponding to the From field in the transaction. For example, for the seventh transaction, the field value under the FR field corresponding to the From field is ZK-Rollup, then it may be added to the corresponding ZK Txpool.

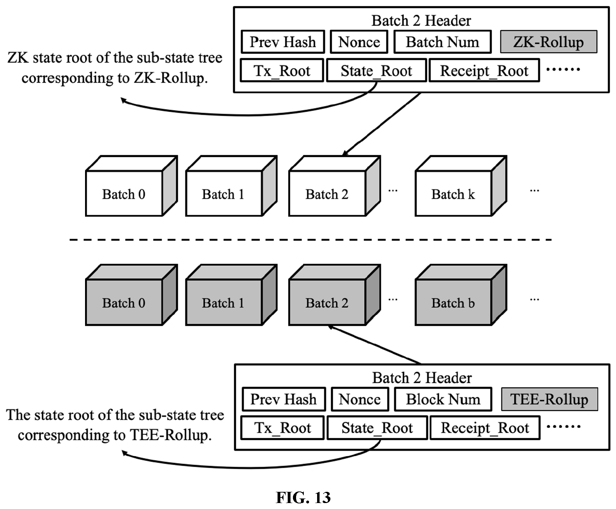

The M rollup modes in the second blockchain system use M different batch chains, and a single batch chain includes a plurality of sequentially connected batches. For a plurality of transactions belonging to the same batch, the rollup mode included under their FR fields needs to remain the same. The batch header of any batch may, in addition to including the conventional Prev Hash, Nonce, Batch Num (batch number), Tx_Root, State_Root, and Receipt_Root, further include the rollup mode corresponding to the batch. Referring to FIG. 13, for any batch in the batch chain corresponding to ZK-Rollup, for example, batch 2, the batch header of the batch 2 includes ZK-Rollup, and among the plurality of transactions included in the batch 2, the FR fields corresponding to the From fields are all ZK-Rollup; for any batch in the batch chain corresponding to TEE-Rollup, for example, batch 2, the batch header of the batch 2 includes TEE-Rollup, and among the plurality of transactions included in the batch 2, the FR fields corresponding to the From fields are all TEE-Rollup.

It should be noted that when the M rollup modes use M different batch chains, for any batch in the jth batch chain corresponding to any jth rollup mode, the State _Root included in the batch header of the batch is the state root of the sub-state tree corresponding to the jth rollup mode in the world state tree of the second blockchain system, rather than the state root Global state root of the entire world state of the second blockchain system. For example, please refer to FIG. 7 and FIG. 13, for any batch in the batch chain corresponding to ZK-Rollup in FIG. 13, for example, batch 2, the State_root included in its batch header may be the state root ZK state root of the sub-state tree corresponding to ZK-Rollup in the state tree corresponding to the world state of the second blockchain system shown in FIG. 7; correspondingly, for any batch in the batch chain corresponding to TEE-Rollup in FIG. 13, for example, batch 2, the State_root included in its batch header may be the state root TEE state root of the sub-state tree corresponding to TEE-Rollup in the state tree corresponding to the world state of the second blockchain system shown in FIG. 7.

Since the M rollup modes use M different batch chains, the Sequencer of the second blockchain system can implement, in parallel without interfering with each other: packing and executing the transactions in the M transaction pools corresponding to the M rollup modes. Obviously, the Sequencer may also, through other means such as dividing time slices, sequentially pack and execute the transactions in the M transaction pools in a certain order.

In summary, after the seventh transaction is added to the transaction pool corresponding to the first rollup mode, the Sequencer of the second blockchain system may, at a certain moment, execute the following Step S1203, pulling a plurality of transactions from the transaction pool corresponding to the first rollup mode, sorting and packing the plurality of transactions, where the plurality of transactions include the seventh transaction.

Taking the case where the seventh transaction is packed into the batch k (i.e., the first batch) included in the batch chain corresponding to ZK-Rollup as an example.

The Sequencer pulls a plurality of transactions from the ZK Txpool for sorting and packing, and according to the state data corresponding to the previous batch of the batch k, executes the plurality of transactions packed into the batch k in the order of the sorting result. Therefore, where the plurality of transactions in the batch k include the seventh transaction, the Sequencer of the second blockchain system will execute Step S1205.

Step S1205: the second blockchain system executes the seventh transaction, to implement: according to the resource transfer share, transferring the second target resource from the first sub-account that belongs to the first rollup mode and corresponds to the first account to the first relay sub-account that belongs to the first rollup mode and corresponds to the relay account.

In the process of executing the seventh transaction, the Sequencer may first determine the first sub-account that belongs to the first rollup mode and corresponds to the first account, and, according to the pre-configured relay account, determine the first relay sub-account that belongs to the first rollup mode and corresponds to the relay account. Wherein, the Sequencer may, for example, implement determining the first sub-account and the first relay sub-account through the derivation calculation or the mapping relationship table or the like described above, which will not be repeated here.

In the process of executing the seventh transaction, the Sequencer may, for example, after determining that the first sub-account that belongs to ZK-Rollup and corresponds to the account A1 is the account ZK-A1, and determining that the first relay sub-account that belongs to ZK-Rollup and corresponds to the account A is the account ZK-AA, transfer the second target resource from the account ZK-A1 to the account ZK-AA according to the resource transfer share T.

After the Sequencer completes executing the plurality of transactions belonging to the batch k, referring to the foregoing, the Sequencer may obtain the rollup data corresponding to the batch k, such as the pre-state root (Pre State Root), the post-state root (Post State Root), the batch number k, and the transaction sequence composed of the plurality of transactions. It should be noted that the Pre State Root here refers to the state root (for example, ZK state root) of the sub-state tree corresponding to the first rollup mode in the state tree corresponding to the world state of the second blockchain system before the plurality of transactions in the batch k are executed; the Post State Root refers to the state root of the sub-state tree corresponding to the first rollup mode in the state tree corresponding to the world state of the second blockchain system after the plurality of transactions in the batch k are executed.

Moreover, in order to distinguish between batches belonging to different batch chains, the rollup data of the first batch to which the seventh transaction belongs may further include the first rollup mode corresponding to the batch chain to which the first batch belongs.

Correspondingly, the second blockchain system may further continue to execute Step S1207, sending an eighth transaction to the first blockchain system, where the eighth transaction is used to invoke the fourth method function in the Rollup Contract deployed by the first blockchain system, and the eighth transaction includes the rollup data of the first batch to which the seventh transaction belongs.

The fourth method function in the Rollup Contract is, for example, the commitBatch() contract interface described above.

Correspondingly, the first blockchain system may execute Step S1209, executing the fourth method function in the Rollup Contract according to the eighth transaction, to implement processing the rollup data of the first batch to which the seventh transaction belongs.

Tracing back to the foregoing, the rollup data of the first batch, i.e., the batch k, may include: the first rollup mode, the pre-state root, the post-state root, the batch number k, the transaction sequence composed of the plurality of transactions belonging to the batch k, etc. The process of processing the rollup data of the batch k may include: verifying whether the Pre State Root in the eighth transaction is equal to the Current State Root corresponding to the first rollup mode in the Rollup Contract contract storage, and if equal, storing the transaction sequence in the eighth transaction into the calldata, and updating the Current State Root corresponding to the first rollup mode in the Rollup Contract contract storage to the Post State Root; and setting the position index of the transaction sequence in the calldata according to the first rollup mode and the batch number k.

Referring to the foregoing Rollup mechanism, after the second blockchain system completes submitting the first batch, i.e., the batch k, through the foregoing Step S1209, the second blockchain system further needs to submit, through the first prover corresponding to the first rollup mode, the first proof data corresponding to the first batch to the first blockchain system. That is, the second blockchain system may further execute the following Step S1211.

Step S1211: the second blockchain system sends a ninth transaction to the first blockchain system through the first prover corresponding to the first rollup mode, where the ninth transaction is used to invoke the fifth method function in the Rollup Contract, and the ninth transaction includes the first rollup mode and the first proof data corresponding to the first batch.

The data format of the first proof data may be referred to the description related to the Rollup mechanism above, which will not be repeated.

Correspondingly, in Step S1213, the first blockchain system executes the fifth method function according to the ninth transaction, to implement: according to the verification method corresponding to the first rollup mode, using the proof data corresponding to the first batch, verifying whether the plurality of transactions in the first batch are correctly executed, and where the verification passes, generating an asset-to-be-transferred event corresponding to the seventh transaction.

When the first rollup mode includes the ZK-Rollup mode, the fifth method function in the Rollup Contract may, for example, according to the ZK-Rollup included in the ninth transaction, invoke within the contract the verification method ZK verifier corresponding to ZK-Rollup, and process, through the ZK verifier, the first proof data included in the ninth transaction, to complete verifying whether the plurality of transactions in the first batch are correctly executed. If the verification passes, the first batch enters the immutable state; in addition, the fifth method function itself, or by invoking the Bridge Contract within the contract, implements generating an asset-to-be-transferred event for transactions of certain specific data formats, and generating an asset transfer complete event for transactions of certain specific data formats.

In an exemplary rule, if the account under the From field in a transaction is not the relay account, and the rollup modes included in the FR field and the TR field are different, then an asset-to-be-transferred event may be generated for the transaction; if the account under the From field in a transaction is the relay account, then an asset transfer complete event may be generated for the transaction. Based on this exemplary rule and the data structure of the foregoing seventh transaction, it is not difficult to understand that an asset-to-be-transferred event may be generated for the seventh transaction.

The Bridge Contract may further maintain a set of events allowed to be consumed. For the asset-to-be-transferred event, it may be invoked within the contract through the fifth method function, or the Bridge Contract may, by enabling a corresponding event listening mechanism, ultimately implement adding the asset-to-be-transferred event to the event set maintained in the Bridge Contract.

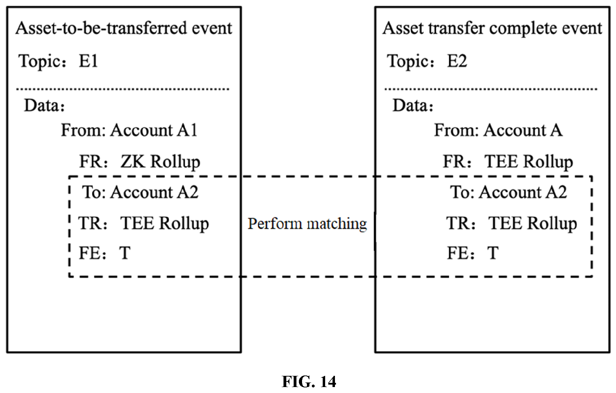

In a typical example, referring to FIG. 14, for an asset-to-be-transferred event corresponding to a certain transaction, the field value E1 under the Topic field is used to indicate that the event is an asset-to-be-transferred event. In addition, the Data field of the asset-to-be-transferred event may further include: a sub-field From, used to store the account under the From field of the corresponding transaction; a sub-field To, used to store the account under the To field in the corresponding transaction; a sub-field FR, used to store the rollup mode under the FR field in the corresponding transaction; a sub-field TR, used to store the rollup mode under the TR field in the corresponding transaction; and a sub-field FE, used to store the resource transfer share included under the Data field in the corresponding transaction.

Referring to FIG. 14, for an asset transfer complete event corresponding to a certain transaction, the field value E2 under the Topic field is used to indicate that the event is an asset transfer complete event. In addition, the Data field of the asset transfer complete event may further include: a sub-field To, used to store the account under the To field in the corresponding transaction; a sub-field TR, used to store the rollup mode under the TR field in the corresponding transaction; a sub-field FE, used to store the resource transfer share included under the Data field in the corresponding transaction.

The asset transfer complete event is used to support the Bridge Contract in matching it with the asset-to-be-transferred event in the event set, so as to confirm that the asset transfer transaction that the transaction corresponding to the asset-to-be-transferred event is expected to execute has been completed. For example, please continue to refer to the asset transfer complete event and the asset-to-be-transferred event shown in FIG. 14; if, by matching the Data fields of the two events, it is found that among the sub-fields included in their respective Data fields: the account under the sub-field To field is the same, the rollup mode under the sub-field TR field is the same, and the resource transfer shares included under the FE field are all the same, then the matching is successful.

After the first blockchain system generates the asset-to-be-transferred event corresponding to the seventh transaction, the shared Bridge included in the relayer of the second blockchain system may listen to the asset-to-be-transferred event, and may further continue to execute the following Step S1215.

Step S1215: the second blockchain system generates a tenth transaction according to the asset-to-be-transferred event corresponding to the seventh transaction, where the sender field and the recipient field of the tenth transaction respectively include the relay account and the second account, and the tenth transaction further includes the resource transfer share and the second rollup mode.

The information in the tenth transaction other than the relay account may come from the asset-to-be-transferred event corresponding to the seventh transaction. Continuing the foregoing example, in the tenth transaction: the From field may, for example, include the account A, the To field may include the account A2, the FR field corresponding to the From field may include TEE-Rollup, the TR field corresponding to the To field may include TEE-Rollup, and the Data field may, for example, include the resource transfer share T. Correspondingly, since the field value under the FR field corresponding to the From field in the tenth transaction is TEE-Rollup, the tenth transaction will be added to the corresponding TEE Txpool.

After the tenth transaction is added to the transaction pool corresponding to the second rollup mode, the Sequencer of the second blockchain system may, at a certain moment, execute the following Step S1217, pulling a plurality of transactions from the transaction pool corresponding to the second rollup mode, sorting and packing the plurality of transactions, where the plurality of transactions include the tenth transaction.

Taking the case where the tenth transaction is packed into the batch b (i.e., the second batch) included in the batch chain corresponding to TEE-Rollup as an example.

The Sequencer pulls a plurality of transactions from the TEE Txpool for sorting and packing, and according to the state data corresponding to the previous batch of the batch b, executes the plurality of transactions packed into the batch b in the order of the sorting result. Therefore, where the plurality of transactions in the batch b include the tenth transaction, the Sequencer of the second blockchain system will execute Step S1219.

Step S1219: the second blockchain system executes the tenth transaction, to implement: according to the resource transfer share, transferring the second target resource from the second relay sub-account that belongs to the second rollup mode and corresponds to the relay account to the second sub-account that belongs to the second rollup mode and corresponds to the second account.

In the process of executing the tenth transaction, the Sequencer may first determine the second sub-account that belongs to the second rollup mode and corresponds to the second account, and the second relay sub-account that belongs to the second rollup mode and corresponds to the relay account. The manner in which the Sequencer determines the second sub-account and the second relay sub-account is the same as the manner in which the first sub-account and the first relay sub-account are determined, for example, including the derivation calculation or the mapping relationship table or the like described above, which will not be repeated here.

In the process of executing the tenth transaction, the Sequencer may, for example, after determining that the second sub-account that belongs to TEE-Rollup and corresponds to the account A2 is the account TEE-A2, and determining that the second relay sub-account that belongs to TEE-Rollup and corresponds to the account A is the account TEE-AA, transfer the second target resource from the account TEE-AA to the account TEE-A2 according to the resource transfer share T.

In the foregoing method embodiment, since the M rollup modes correspond to M different batch chains, it is advantageous for the blockchain system to implement, through parallel technology, the efficient submission of the various batches belonging to the M batch chains. In addition, the second blockchain system needs to, only after the first batch to which the seventh transaction belongs has entered the immutable state, complete generating the tenth transaction and executing the tenth transaction based on the asset-to-be-transferred event corresponding to the seventh transaction, thereby completing the resource transfer transaction that the seventh transaction is expected to complete; the second batch to which the tenth transaction belongs will not be rolled back due to the execution failure of the first batch to which the seventh transaction belongs.

However, referring to the ZK-Rollup mechanism and the TEE-Rollup mechanism exemplarily described above, after the second blockchain system completes executing the plurality of transactions belonging to a certain batch, it further needs to submit the corresponding batch and the proof data corresponding to the batch to the first blockchain system. Moreover, the following situation may also occur: after the first batch to which the seventh transaction belongs has entered the immutable state, the tenth transaction fails to be successfully executed for some reasons, or even, for some reasons, the tenth transaction corresponding to the seventh transaction is not successfully generated, thereby causing the resource transfer transaction that the seventh transaction is expected to complete not to be accurately completed.

In view of this, on the basis of the foregoing Step S1201 to Step S1219, the first blockchain system and the second blockchain system may further jointly execute the following method Steps S1221 to S1227.

Continuing the foregoing, after the Sequencer completes executing the plurality of transactions belonging to the batch b, the Sequencer may obtain the rollup data corresponding to the batch b, such as the pre-state root (Pre State Root), the post-state root (Post State Root), the batch number b, and the transaction sequence composed of the plurality of transactions. It should be noted that the Pre State Root here refers to the state root (for example, TEE state root) of the sub-state tree corresponding to the second rollup mode in the state tree corresponding to the world state of the second blockchain system before the plurality of transactions in the batch b are executed; the Post State Root refers to the state root of the sub-state tree corresponding to the second rollup mode in the state tree corresponding to the world state of the second blockchain system after the plurality of transactions in the batch k are executed.

Moreover, in order to distinguish between batches belonging to different batch chains, the rollup data of the second batch to which the tenth transaction belongs may further include the second rollup mode corresponding to the batch chain to which the second batch belongs.

Based on the rollup data of the second batch to which the tenth transaction belongs, the first blockchain system may further continue to execute the following Step S1221, sending an eleventh transaction to the first blockchain system, where the eleventh transaction is used to invoke the fourth method function in the Rollup Contract deployed by the first blockchain system, and the eleventh transaction includes the rollup data of the second batch.

Correspondingly, the first blockchain system may further continue to execute Step S1223, executing the fourth method function in the Rollup Contract according to the eleventh transaction, to implement processing the rollup data of the second batch to which the tenth transaction belongs.

Tracing back to the foregoing, the rollup data of the second batch, i.e., the batch b, may include: the second rollup mode, the pre-state root, the post-state root, the batch number b, the transaction sequence composed of the plurality of transactions belonging to the batch b, etc. The process of processing the rollup data of the batch b may include: verifying whether the Pre State Root in the tenth transaction is equal to the Current State Root corresponding to the second rollup mode in the Rollup Contract contract storage, and if equal, storing the transaction sequence in the eleventh transaction into the calldata, and updating the Current State Root corresponding to the second rollup mode in the Rollup Contract contract storage to the Post State Root; and setting the position index of the transaction sequence in the calldata according to the second rollup mode and the batch number b.

Referring to the foregoing Rollup mechanism, after the second blockchain system completes submitting the second batch, i.e., the batch b, through the foregoing Step S1223, the second blockchain system further needs to submit, through the second prover corresponding to the second rollup mode, the second proof data corresponding to the second batch to the first blockchain system. That is, the second blockchain system may further execute the following Step S1225.

In Step S1225, the second blockchain system sends a twelfth transaction to the first blockchain system through the second prover corresponding to the second rollup mode, where the twelfth transaction is used to invoke the fifth method function in the Rollup, and the twelfth transaction includes the second rollup mode and the second proof data corresponding to the second batch.

The data structure of the second proof data may be referred to the description related to the Rollup mechanism above, which will not be repeated here.

Correspondingly, in Step S1227, the first blockchain system executes the fifth method function in the Rollup Contract according to the twelfth transaction, to implement: according to the verification method corresponding to the second rollup mode, using the second proof data corresponding to the second batch, verifying whether the plurality of transactions in the second batch are correctly executed, and where the verification passes, generating an asset transfer complete event corresponding to the tenth transaction.

When the second rollup mode includes the TEE-Rollup mode, the fifth method function in the Rollup Contract may, for example, according to the TEE-Rollup included in the twelfth transaction, invoke within the contract the verification method TEE verifier corresponding to TEE-Rollup, and process, through the TEE verifier, the second proof data included in the twelfth transaction, to complete verifying whether the plurality of transactions in the second batch are correctly executed. If the verification passes, the second batch enters the immutable state; at the same time, the fifth method function itself, or by invoking the Bridge Contract within the contract, implements generating an asset-to-be-transferred event for transactions of certain specific data formats, and generating an asset transfer complete event for transactions of certain specific data formats.

Referring to the content under the foregoing Step S1213, the asset transfer complete event generated for the tenth transaction may be used to consume the asset-to-be-transferred event corresponding to the seventh transaction in the event set maintained by the Bridge Contract, thereby confirming that the transaction that the seventh transaction is expected to complete has been successfully executed. Where the seventh transaction is successfully executed and the tenth transaction is successfully executed, the asset-to-be-transferred event and the asset transfer complete event shown in FIG. 14 may be correspondingly generated, and the two events will be successfully matched.

Through the foregoing Steps S1221 to S1227, for the case described above where the seventh transaction is successfully executed but the tenth transaction is not successfully executed, the asset-to-be-transferred event corresponding to the seventh transaction in the event set cannot be consumed, and the administrator may, by querying the event set, confirm that the resource transfer transaction that the seventh transaction is expected to complete has not been successfully executed, and, based on the asset-to-be-transferred event corresponding to the seventh transaction, return the corresponding second target resource to the sub-account that belongs to the first rollup mode and corresponds to the first account.

In the technical solution described in the foregoing method Steps S1201 to S1227, what is mainly described is the process of transferring a resource from the first sub-account that belongs to the first rollup mode and corresponds to the first account to the second sub-account that belongs to the second rollup mode (different from the first rollup mode) and corresponds to the second account. However, in some technical scenarios, there may be certain transactions whose FR field and TR field include the same rollup mode; in this case, the transaction that the transaction is expected to complete may be completed through other means.

In one possible implementation, the second blockchain system may receive a thirteenth transaction, where the sender field and the recipient field of the thirteenth transaction respectively include the first account and the second account, and the thirteenth transaction further includes a resource transfer share, the first rollup mode corresponding to the sender field, and the first rollup mode corresponding to the recipient field; in this case, after the second blockchain system packs the thirteenth transaction into a certain batch corresponding to the first rollup mode, for example, the fourth batch, when executing the thirteenth transaction, it may directly, according to the resource transfer share, transfer the second target resource from the first sub-account that belongs to the first rollup mode and corresponds to the first account to the third sub-account that belongs to the first rollup mode and corresponds to the second account.

Correspondingly, after the fourth batch is submitted to the first blockchain system through the fourth method function, and then the proof data of the fourth batch is correspondingly submitted to the first blockchain system through the fifth method function, there is no need to generate an asset-to-be-transferred event.

Based on the same concept as the foregoing method embodiments, an embodiment of the present specification further provides a second blockchain system, where the second blockchain system supports M rollup modes, comprising: a receiver, configured to receive a seventh transaction, where the sender field and the recipient field of the seventh transaction respectively include a first account and a second account, and the seventh transaction further includes a resource transfer share, a first rollup mode corresponding to the sender field, and a second rollup mode corresponding to the recipient field; a Sequencer, configured to execute the seventh transaction, to implement: according to the resource transfer share, transferring a second target resource from a first sub-account that belongs to the first rollup mode and corresponds to the first account to a first relay sub-account that belongs to the first rollup mode and corresponds to a relay account; a relayer, configured to send an eighth transaction to a first blockchain system, used to invoke a fourth method function in a rollup contract deployed by the first blockchain system, so that the first blockchain system processes the rollup data of a first packed transaction batch to which the seventh transaction belongs; and to send a ninth transaction to the first blockchain system, used to invoke a fifth method function in the rollup contract, so that the first blockchain system, according to the verification method corresponding to the first rollup mode, using the first proof data corresponding to the first batch, verifies whether a plurality of transactions in the first batch are correctly executed, and, where the verification passes, generates an asset-to-be-transferred event corresponding to the seventh transaction; the Sequencer, configured to generate a tenth transaction according to the asset-to-be-transferred event corresponding to the seventh transaction, and execute the tenth transaction, to implement: according to the resource transfer share, transferring the second target resource from a second relay sub-account that belongs to the second rollup mode and corresponds to the relay account to a second sub-account that belongs to the second rollup mode and corresponds to the second account.

Based on the same concept as the foregoing method embodiments, an embodiment of the present specification further provides a blockchain node in a first blockchain system, where a rollup contract is deployed in the first blockchain system, the rollup contract includes a fourth method function and a fifth method function, and the blockchain node comprises: a transaction receiving unit, configured to receive an eighth transaction from a second blockchain system, where the eighth transaction is used to invoke the fourth method function, the eighth transaction includes the rollup data of a first packed transaction batch to which a seventh transaction belongs, the sender field and the recipient field of the seventh transaction respectively include a first account and a second account, and the seventh transaction further includes a resource transfer share, a first rollup mode corresponding to the sender field, and a second rollup mode corresponding to the recipient field, and the eighth transaction is initiated after the second blockchain system, by executing the seventh transaction, implements transferring a second target resource from a first sub-account that belongs to the first rollup mode and corresponds to the first account to a first relay sub-account that belongs to the first rollup mode and corresponds to a relay account, according to the resource transfer share; a transaction executing unit, configured to execute the fourth method function according to the eighth transaction, to implement processing the rollup data of the first batch; the transaction receiving unit, further configured to receive a ninth transaction from the second blockchain system, where the ninth transaction is used to invoke the fifth method function, and the ninth transaction includes the first rollup mode and the first proof data corresponding to the first batch; the transaction executing unit, further configured to execute the fifth method function according to the ninth transaction, to implement: according to the verification method corresponding to the first rollup mode, using the proof data corresponding to the first batch, verifying whether a plurality of transactions in the first batch are correctly executed, and, where the verification passes, generating an asset-to-be-transferred event corresponding to the seventh transaction; where the asset transfer event is used to support the second blockchain system in generating a tenth transaction, and, by executing the tenth transaction, implementing: according to the resource transfer share, transferring the second target resource from a second relay sub-account that belongs to the second rollup mode and corresponds to the relay account to a second sub-account that belongs to the second rollup mode and corresponds to the second account.

An embodiment of the present specification further provides a computer-readable storage medium, on which a computer program/instructions are stored, where, when the computer program/instructions are executed in a computer, they cause the computer to perform the method steps performed by the first blockchain system or the second blockchain system in the foregoing various embodiments.

An embodiment of the present specification further provides a computing device, comprising a memory and a processor, where a computer program/instructions are stored in the memory, and when the processor executes the computer program/instructions, the method steps performed by the first blockchain system or the second blockchain system in the foregoing various embodiments are implemented.

In the 1990s, an improvement to a technology could be clearly distinguished as an improvement in hardware (for example, an improvement to a circuit structure such as a diode, a transistor, or a switch) or an improvement in software (an improvement to a method flow). However, with the development of technology, many improvements to method flows nowadays can already be regarded as direct improvements to hardware circuit structures. Designers almost always obtain the corresponding hardware circuit structure by programming the improved method flow into a hardware circuit. Therefore, it cannot be said that an improvement to a method flow cannot be implemented with a hardware entity module. For example, a Programmable Logic Device (PLD) (for example, a Field Programmable Gate Array (FPGA)) is such an integrated circuit whose logic functions are determined by the user's programming of the device. Designers program by themselves to "integrate" a digital system onto a single PLD, without requiring a chip manufacturer to design and produce a dedicated integrated circuit chip. Moreover, nowadays, instead of manually producing integrated circuit chips, this programming is also mostly implemented using "logic compiler" software, which is similar to the software compiler used in program development and writing, and the original code before compilation must also be written in a specific programming language, which is called a Hardware Description Language (HDL); and there is not just one HDL, but many kinds, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc., and the most commonly used at present are VHDL (Very-High-Speed Integrated Circuit Hardware Description Language) and Verilog. Those skilled in the art should also be clear that, by simply performing a little logic programming on the method flow using the above several kinds of hardware description languages and programming it into an integrated circuit, the hardware circuit implementing the logic method flow can be easily obtained.

The controller may be implemented in any suitable manner; for example, the controller may take the form of, for example, a microprocessor or processor and a computer-readable medium storing computer-readable program code (for example, software or firmware) executable by the (micro)processor, logic gates, switches, an Application Specific Integrated Circuit (ASIC), a programmable logic controller, and an embedded microcontroller. Examples of the controller include but are not limited to the following microcontrollers: ARC 625D, Atmel AT91SAM, Microchip PIC18F26K20, and Silicone Labs C8051F320; the memory controller may further be implemented as a part of the control logic of the memory. Those skilled in the art also know that, in addition to implementing the controller purely in the form of computer-readable program code, it is entirely possible to, by logically programming the method steps, cause the controller to implement the same functions in the form of logic gates, switches, application specific integrated circuits, programmable logic controllers, embedded microcontrollers, and the like. Therefore, such a controller may be regarded as a hardware component, and the means included therein for implementing various functions may also be regarded as a structure within the hardware component. Or even, the means for implementing various functions may be regarded as both a software module for implementing the method and a structure within the hardware component.

The systems, apparatuses, modules, or units set forth in the foregoing embodiments may be specifically implemented by a computer chip or an entity, or by a product having a certain function. A typical implementation device is a server system. Of course, this application does not exclude that, with the development of computer technology in the future, the computer implementing the functions of the foregoing embodiments may be, for example, a personal computer, a laptop computer, a vehicle-mounted human-computer interaction device, a cellular telephone, a camera phone, a smart phone, a personal digital assistant, a media player, a navigation device, an email device, a game console, a tablet computer, a wearable device, or a combination of any of these devices.

Although one or more embodiments of the present specification provide the method operation steps as described in the embodiments or flowcharts, more or fewer operation steps may be included based on conventional or non-inventive means. The sequence of steps enumerated in the embodiments is merely one of the many step execution sequences, and does not represent the only execution sequence. When executed in an actual apparatus or terminal product, execution may be performed according to the method sequence shown in the embodiments or the drawings, or in parallel (for example, an environment of parallel processors or multi-threaded processing, or even a distributed data processing environment). The terms "include," "comprise," or any other variants thereof are intended to cover non-exclusive inclusion, such that a process, method, product, or device that includes a series of elements includes not only those elements, but also other elements not explicitly listed, or elements inherent to such process, method, product, or device. Without further limitation, it is not excluded that there are additional identical or equivalent elements in the process, method, product, or device that includes the said elements. For example, if words such as first, second, etc. are used to denote names, they do not denote any particular order.

For convenience of description, when describing the above apparatus, the functions are divided into various modules which are described separately. Of course, when implementing one or more of the present specification, the functions of the various modules may be implemented in the same one or more pieces of software and/or hardware, and the modules implementing the same function may also be implemented by a combination of a plurality of sub-modules or sub-units, etc. The apparatus embodiments described above are merely illustrative; for example, the division of the units is merely a logical function division, and there may be other division manners in actual implementation, for example, a plurality of units or components may be combined or may be integrated into another system, or some features may be ignored, or not performed. Another point is that the mutual coupling or direct coupling or communication connection shown or discussed may be an indirect coupling or communication connection through some interfaces, apparatuses, or units, and may be in electrical, mechanical, or other forms.

The present invention is described with reference to the flowcharts and/or block diagrams of the method, apparatus (system), and computer program product according to the embodiments of the present invention. It should be understood that each flow and/or block in the flowcharts and/or block diagrams, and a combination of flows and/or blocks in the flowcharts and/or block diagrams, may be implemented by computer program instructions. These computer program instructions may be provided to a processor of a general-purpose computer, a special-purpose computer, an embedded processor, or other programmable data processing device to produce a machine, such that the instructions executed by the processor of the computer or other programmable data processing device produce an apparatus for implementing the functions specified in one or more flows in the flowcharts and/or one or more blocks in the block diagrams.

These computer program instructions may also be stored in a computer-readable memory that can direct a computer or other programmable data processing device to work in a specific manner, such that the instructions stored in the computer-readable memory produce an article of manufacture including an instruction apparatus that implements the functions specified in one or more flows in the flowcharts and/or one or more blocks in the block diagrams.

These computer program instructions may also be loaded onto a computer or other programmable data processing device, such that a series of operation steps are performed on the computer or other programmable device to produce computer-implemented processing, such that the instructions executed on the computer or other programmable device provide steps for implementing the functions specified in one or more flows in the flowcharts and/or one or more blocks in the block diagrams.

In a typical configuration, a computing device includes one or more processors (CPUs), an input/output interface, a network interface, and a memory.

The memory may include forms of a non-permanent memory in a computer-readable medium, a random access memory (RAM), and/or a non-volatile memory, etc., such as a read-only memory (ROM) or a flash memory (flash RAM). The memory is an example of a computer-readable medium.

Computer-readable media include permanent and non-permanent, removable and non-removable media, and information storage may be implemented by any method or technology. The information may be computer-readable instructions, data structures, modules of a program, or other data. Examples of a computer storage medium include, but are not limited to, a phase-change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a magnetic cassette tape, magnetic tape disk storage, graphene storage, or other magnetic storage devices, or any other non-transmission medium, which can be used to store information that can be accessed by a computing device. As defined herein, a computer-readable medium does not include transitory computer-readable media (transitory media), such as a modulated data signal and a carrier wave.

Those skilled in the art should understand that one or more embodiments of the present specification may be provided as a method, a system, or a computer program product. Therefore, one or more embodiments of the present specification may take the form of a complete hardware embodiment, a complete software embodiment, or an embodiment combining software and hardware aspects. Moreover, one or more embodiments of the present specification may take the form of a computer program product implemented on one or more computer-usable storage media (including but not limited to a magnetic disk memory, a CD-ROM, an optical memory, etc.) that contain computer-usable program code therein.

One or more embodiments of the present specification may be described in the general context of computer-executable instructions executed by a computer, such as program modules. Generally, program modules include routines, programs, objects, components, data structures, etc. that perform particular tasks or implement particular abstract data types. One or more embodiments of the present specification may also be practiced in distributed computing environments in which tasks are performed by remote processing devices that are connected through a communication network. In a distributed computing environment, program modules may be located in both local and remote computer storage media including storage devices.

The various embodiments in the present specification are all described in a progressive manner, and the same or similar parts between the various embodiments may be referred to each other, with each embodiment focusing on the differences from the other embodiments. In particular, for the system embodiments, since they are basically similar to the method embodiments, the description is relatively simple, and for the relevant parts, reference may be made to part of the description of the method embodiments. In the description of the present specification, descriptions with reference to the terms "one embodiment," "some embodiments," "example," "specific example," or "some examples," etc. mean that specific features, structures, materials, or characteristics described in connection with the embodiment or example are included in at least one embodiment or example of the present specification. In the present specification, the schematic expressions of the above terms do not necessarily refer to the same embodiment or example. Moreover, the described specific features, structures, materials, or characteristics may be combined in any one or more embodiments or examples in a suitable manner. In addition, where not mutually contradictory, those skilled in the art may combine and assemble the different embodiments or examples described in the present specification and the features of the different embodiments or examples.

The above descriptions are merely embodiments of one or more embodiments of the present specification, and are not intended to limit one or more embodiments of the present specification. For those skilled in the art, one or more embodiments of the present specification may have various modifications and changes. Any modification, equivalent replacement, improvement, etc. made within the spirit and principle of the present specification shall be included within the scope of the claims.

## Claims

1. A resource management method for a blockchain system, the method being executed by a second blockchain system supporting M types of rollup modes, the method comprising:
receiving a seventh transaction, wherein a sender field and a recipient field of the seventh transaction respectively include a first account and a second account, and the seventh transaction further includes a resource transfer share, a first rollup mode corresponding to the sender field, and a second rollup mode corresponding to the recipient field;
executing the seventh transaction to implement: transferring, according to the resource transfer share, a second target resource from a first sub-account belonging to the first rollup mode and corresponding to the first account to a first relay sub-account belonging to the first rollup mode and corresponding to a relay account;
sending an eighth transaction to a first blockchain system for invoking a fourth method function in a rollup contract deployed in the first blockchain system, to cause the first blockchain system to process rollup data of a first packed transaction batch to which the seventh transaction belongs;
sending a ninth transaction to the first blockchain system for invoking a fifth method function in the rollup contract, to cause the first blockchain system to generate an asset-to-be-transferred event corresponding to the seventh transaction after verifying that multiple transactions in the first batch have been correctly executed; and
generating a tenth transaction according to the asset-to-be-transferred event corresponding to the seventh transaction, and executing the tenth transaction to implement: transferring, according to the resource transfer share, the second target resource from a second relay sub-account belonging to the second rollup mode and corresponding to the relay account to a second sub-account belonging to the second rollup mode and corresponding to the second account.

2. The method according to claim 1, wherein a state tree corresponding to a world state of the second blockchain system comprises M sub-state trees corresponding to the M types of rollup modes; and wherein a state root included in a batch header of the first batch to which the seventh transaction belongs is a state root of a sub-state tree corresponding to the first rollup mode.

3. The method according to claim 1, wherein the M types of rollup modes correspond to M batch chains; the first batch to which the seventh transaction belongs is located in a batch chain corresponding to the first rollup mode; and a second batch to which the tenth transaction belongs is located in a batch chain corresponding to the second rollup mode.

4. The method according to claim 1, wherein the second blockchain system comprises M transaction pools corresponding to the M types of rollup modes; before the seventh transaction is executed, the seventh transaction is cached in a transaction pool corresponding to the first rollup mode; and before the tenth transaction is executed, the tenth transaction is cached in a transaction pool corresponding to the second rollup mode.

5. The method according to claim 4, further comprising: before executing the seventh transaction, pulling a plurality of transactions belonging to the first batch from the transaction pool corresponding to the first rollup mode, sorting and packing the plurality of transactions, wherein the plurality of transactions comprise the seventh transaction.

6. The method according to claim 4, further comprising: before executing the tenth transaction, pulling a plurality of transactions belonging to a second batch from the transaction pool corresponding to the second rollup mode, sorting and packing the plurality of transactions, wherein the plurality of transactions comprise the tenth transaction.

7. The method according to claim 1, further comprising:
sending an eleventh transaction to the first blockchain system for invoking the fourth method function in the rollup contract deployed in the first blockchain system, to cause the first blockchain system to process rollup data of a second batch to which the tenth transaction belongs; and
sending a twelfth transaction to the first blockchain system for invoking the fifth method function in the rollup contract, to cause the first blockchain system to verify, according to a verification method corresponding to the second rollup mode and by using second proof data corresponding to the second batch, whether multiple transactions in the second batch have been correctly executed, and to generate an asset transfer complete event corresponding to the tenth transaction if the verification is passed.

8. The method according to claim 7, wherein the asset transfer complete event corresponding to the tenth transaction and the asset-to-be-transferred event corresponding to the seventh transaction are used to support the first blockchain system in determining, upon successful matching thereof, that resource transfer according to the seventh transaction has been completed.

9. The method according to claim 1, further comprising:
obtaining a resource distribution event from the first blockchain system, wherein a bridge contract is deployed in the first blockchain system, and the resource distribution event is generated by the first blockchain system executing the bridge contract according to a first transaction, the first transaction being initiated by the first account and indicating N types of rollup modes among the M types of rollup modes and respective resource distribution shares corresponding to the N types of rollup modes;
generating N sub-transactions according to the resource distribution event, wherein any i-th sub-transaction includes the first account, an i-th rollup mode among the N types of rollup modes, and a resource distribution share corresponding thereto; and
executing the i-th sub-transaction to implement: depositing a second target resource into an i-th first sub-account belonging to the i-th rollup mode and corresponding to the first account according to the resource distribution share corresponding to the i-th rollup mode.

10. The method according to claim 9, wherein the i-th first sub-account is obtained by performing derivation calculation based on the first account and the i-th rollup mode.

11. The method according to claim 9, wherein a state tree corresponding to a world state of the second blockchain system comprises M sub-state trees corresponding to the M types of rollup modes; and wherein executing the i-th sub-transaction further comprises: querying whether the i-th first sub-account exists in a sub-state tree corresponding to the i-th rollup mode, and if not, registering the i-th first sub-account in the sub-state tree corresponding to the i-th rollup mode.

12. A resource management method for a blockchain system, executed by a first blockchain system, wherein a rollup contract is deployed in the first blockchain system, and the rollup contract includes a fourth method function and a fifth method function, the method comprising:
receiving an eighth transaction from a second blockchain system, wherein the eighth transaction is for invoking the fourth method function, the eighth transaction includes rollup data of a first packed transaction batch to which a seventh transaction belongs, a sender field and a recipient field of the seventh transaction respectively include a first account and a second account, the seventh transaction further includes a resource transfer share, a first rollup mode corresponding to the sender field, and a second rollup mode corresponding to the recipient field, and the eighth transaction is initiated after the second blockchain system implements, by executing the seventh transaction, transferring a second target resource from a first sub-account belonging to the first rollup mode and corresponding to the first account to a first relay sub-account belonging to the first rollup mode and corresponding to a relay account according to the resource transfer share;
executing the fourth method function according to the eighth transaction to implement processing the rollup data of the first batch;
receiving a ninth transaction from the second blockchain system, wherein the ninth transaction is for invoking the fifth method function, and the ninth transaction includes the first rollup mode and first proof data corresponding to the first batch; and
executing the fifth method function according to the ninth transaction to implement: verifying, according to a verification method corresponding to the first rollup mode and by using the first proof data corresponding to the first batch, whether multiple transactions in the first batch have been correctly executed, and generating an asset-to-be-transferred event corresponding to the seventh transaction if the verification is passed; wherein the asset-to-be-transferred event is used to support the second blockchain system in generating a tenth transaction and implementing, by executing the tenth transaction: transferring, according to the resource transfer share, the second target resource from a second relay sub-account belonging to the second rollup mode and corresponding to the relay account to a second sub-account belonging to the second rollup mode and corresponding to the second account.

13. The method according to claim 12, further comprising:
receiving an eleventh transaction from the second blockchain system, wherein the eleventh transaction is for invoking the fourth method function, and the eleventh transaction includes rollup data of a second batch to which the tenth transaction belongs;
executing the fourth method function according to the eleventh transaction to implement processing the rollup data of the second batch;
receiving a twelfth transaction from the second blockchain system, wherein the twelfth transaction is for invoking the fifth method function, and the twelfth transaction includes the second rollup mode and second proof data corresponding to the second batch; and
executing the fifth method function according to the twelfth transaction to implement: verifying, according to a verification method corresponding to the second rollup mode and by using the second proof data corresponding to the second batch, whether multiple transactions in the second batch have been correctly executed, and generating an asset transfer complete event corresponding to the tenth transaction if the verification is passed.

14. The method according to claim 13, wherein the asset transfer complete event corresponding to the tenth transaction and the asset-to-be-transferred event corresponding to the seventh transaction are used to support the first blockchain system in determining, upon successful matching thereof, that resource transfer according to the seventh transaction has been completed.

15. The method according to claim 12, wherein a bridge contract is deployed in the first blockchain system, and the method further comprises:
receiving a first transaction initiated by the first account, wherein the first transaction is used to invoke the bridge contract, and the first transaction indicates N types of rollup modes among the M types of rollup modes supported by the second blockchain system and respective resource distribution shares corresponding to the N types of rollup modes; and
executing the bridge contract according to the first transaction to implement: generating a resource distribution event, wherein the resource distribution event includes the first account, the N types of rollup modes, and their respective resource distribution shares; and the resource distribution event is used to support the second blockchain system in generating N sub-transactions and implementing, by executing any i-th sub-transaction: depositing a second target resource into an i-th first sub-account belonging to the i-th rollup mode and corresponding to the first account.

16. The method according to claim 15, wherein executing the bridge contract according to the first transaction further implements: transferring a first target resource from the first account to a relay account corresponding to the second blockchain system according to the respective resource distribution shares corresponding to the N types of rollup modes.

17. A second blockchain system supporting M types of rollup modes, comprising:
a receiver configured to receive a seventh transaction, wherein a sender field and a recipient field of the seventh transaction respectively include a first account and a second account, and the seventh transaction further includes a resource transfer share, a first rollup mode corresponding to the sender field, and a second rollup mode corresponding to the recipient field;
a sequencer configured to execute the seventh transaction to implement: transferring, according to the resource transfer share, a second target resource from a first sub-account belonging to the first rollup mode and corresponding to the first account to a first relay sub-account belonging to the first rollup mode and corresponding to a relay account; and
a relayer configured to send an eighth transaction to a first blockchain system for invoking a fourth method function in a rollup contract deployed in the first blockchain system, to cause the first blockchain system to process rollup data of a first packed transaction batch to which the seventh transaction belongs; and send a ninth transaction to the first blockchain system for invoking a fifth method function in the rollup contract, to cause the first blockchain system to generate an asset-to-be-transferred event corresponding to the seventh transaction after verifying that multiple transactions in the first batch have been correctly executed;
wherein the sequencer is further configured to generate a tenth transaction according to the asset-to-be-transferred event corresponding to the seventh transaction, and execute the tenth transaction to implement: transferring, according to the resource transfer share, the second target resource from a second relay sub-account belonging to the second rollup mode and corresponding to the relay account to a second sub-account belonging to the second rollup mode and corresponding to the second account.

18. A blockchain node in a first blockchain system, wherein a rollup contract is deployed in the first blockchain system, and the rollup contract includes a fourth method function and a fifth method function, the blockchain node comprising:
a transaction receiving unit configured to receive an eighth transaction from a second blockchain system, wherein the eighth transaction is used to invoke the fourth method function, the eighth transaction includes rollup data of a first packed transaction batch to which a seventh transaction belongs, a sender field and a recipient field of the seventh transaction respectively include a first account and a second account, the seventh transaction further includes a resource transfer share, a first rollup mode corresponding to the sender field, and a second rollup mode corresponding to the recipient field, and the eighth transaction is initiated after the second blockchain system implements, by executing the seventh transaction, transferring a second target resource from a first sub-account belonging to the first rollup mode and corresponding to the first account to a first relay sub-account belonging to the first rollup mode and corresponding to a relay account according to the resource transfer share; and
a transaction execution unit configured to execute the fourth method function according to the eighth transaction to implement processing the rollup data of the first batch;
wherein the transaction receiving unit is further configured to receive a ninth transaction from the second blockchain system, wherein the ninth transaction is used to invoke the fifth method function, and the ninth transaction includes the first rollup mode and first proof data corresponding to the first batch; and
wherein the transaction execution unit is further configured to execute the fifth method function according to the ninth transaction to implement: verifying, according to a verification method corresponding to the first rollup mode and by using the first proof data corresponding to the first batch, whether multiple transactions in the first batch have been correctly executed, and generating an asset-to-be-transferred event corresponding to the seventh transaction if the verification is passed; wherein the asset-to-be-transferred event is used to support the second blockchain system in generating a tenth transaction and implementing, by executing the tenth transaction: transferring, according to the resource transfer share, the second target resource from a second relay sub-account belonging to the second rollup mode and corresponding to the relay account to a second sub-account belonging to the second rollup mode and corresponding to the second account.
